(19) Europäisches Patentamt
European Patent Office
Office européen des brevets

(11) **EP 4 530 962 A1**

(12) **EUROPEAN PATENT APPLICATION**

(43) Date of publication:
**02.04.2025 Bulletin 2025/14**

(21) Application number: **24202837.1**

(22) Date of filing: **26.09.2024**

(51) International Patent Classification (IPC):
**G06Q 40/12** (2023.01)    **G06Q 40/02** (2023.01)
**G06Q 10/04** (2023.01)    **G06N 20/00** (2019.01)

(52) Cooperative Patent Classification (CPC):
**G06Q 40/12; G06N 20/00; G06Q 10/04;
G06Q 40/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 US 202318474423**

(71) Applicant: Highradius Corporation
**Houston, TX 77042 (US)**

(72) Inventors:
• **KUNWAR, Anupam**
  **Hyderabad 500081 (IN)**
• **MANDAL, Somsuvro**
  **Hyderabad 500081 (IN)**
• **CHORDIA, Anvesh**
  **Hyderabad 500081 (IN)**

(74) Representative: **Ricker, Mathias**
  **Wallinger Ricker Schlotter Tostmann
  Patent- und Rechtsanwälte Partnerschaft mbB
  Zweibrückenstraße 5-7
  80331 München (DE)**

(54) **MACHINE LEARNING BASED COMPUTING METHOD AND SYSTEM FOR DISTRIBUTING FINANCIAL TRANSACTIONS**

(57)    A machine learning based computing method for distributing financial transactions is disclosed. The machine learning based computing method includes steps of: receiving one or more user inputs from one or more users; generating one or more data from the one or more inputs received from the one or more users; converting the month level forecast cash flow data to the week level forecast cash flow data using a machine learning model; converting the week level forecast cash flow data to day level forecast cash flow data using the machine learning model; and providing an output of at least one of: the month level forecast cash flow data, the week level forecast cash flow data, and the day level forecast cash flow data to the one or more users on a user interface associated with one or more electronic devices.

FIG. 1

**Description**

**FIELD OF INVENTION**

Embodiments of the present disclosure relate to machine learning based (ML-based) computing systems, and more particularly relates to a ML-based computing method and system for distributing financial transactions based on sparse data.

**BACKGROUND**

In general, a cash flow prediction is an important tool for managing a business's finances, making informed decisions, managing risk, and meeting regulatory requirements. By predicting a future cash flow, businesses can anticipate when the businesses will have cash on hand and when the businesses will need to borrow money to meet financial obligations. Accurate cash flow predictions can help the businesses to avoid cash shortages and to plan for capital expenditures, expansion, or other financial goals.

The cash flow prediction is also critical for business decision-making. Predicting the future cash flow helps the businesses in evaluating investment opportunities, making pricing decisions, and determining when to hire additional staff or invest in new equipment. Further, accurate cash flow predictions can help businesses in managing financial risks. By anticipating fluctuations in the cash flow, the businesses can make contingency plans to cover unexpected expenses or shortfalls in revenue. There are several methods for predicting the future cash flow including at least one of: a rolling average method and Prophet prediction models developed by Meta. However, the existing methods are tailored to work with dense or rich data sets. Currently, there are methods and systems which can accurately predict the cash flow with sparse data sets. Predicting the future cash flow based on a sparse data set is difficult for the below reasons.

Lack of information: When there is not enough data available, the existing system and method are facing challenges to identify patterns or trends that can form a prediction. Without enough historical data, the existing systems and methods are unable to identify factors that contribute to cash flow fluctuations including at least one of: seasonal trends, changes in consumer behavior, and economic shifts.

Limited scope: A sparse data set may not provide a comprehensive picture of a business's cash flow history. For example, if the sparse data set only covers a short period, and the existing systems and methods may not capture long-term trends or changes that could impact future cash flow. Similarly, if the sparse data set only reflects a specific segment of a business's operations, the existing system and method may not reflect broader trends that could impact the cash flow.

Inconsistent or unreliable data: The sparse data sets may contain gaps or inaccuracies that can skew predictions. Due to incomplete sparse data sets, the existing systems and methods are unable to validate a prediction, as there may not be enough historical data to compare the prediction against.

Unforeseen circumstances: Predicting the cash flow is always subject to unforeseen circumstances that can disrupt the best-laid plans, which include external factors including at least one of: economic downturns, regulatory changes, natural disasters, and changes in consumer behavior. Without enough data to capture these variables, the existing systems and methods can be challenging to create accurate predictions.

Hence, there is a need for an improved machine learning based (ML-based) computing system and method for distributing financial transactions based on sparse data, in order to address the aforementioned issues.

**SUMMARY**

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) computing method for distributing financial transactions is disclosed. The ML-based computing method includes receiving one or more user inputs from one or more users. The one or more user inputs include information related to at least one of: an entity and a lookback period. The ML-based computing method further includes generating one or more data from the one or more inputs received from the one or more users. The one or more data include at least one of: holiday data, historical cash flow data, and forecast cash flow data. The forecast cash flow data include at least one of: month level forecast cash flow data and week level forecast cash flow data.

The ML-based computing method further includes converting the month level forecast cash flow data to the week level forecast cash flow data when at least one of: the holiday data, the historical cash flow data, and the month level forecast cash flow data are generated from the one or more inputs, using a machine learning model. The ML-based computing method further includes converting the week level forecast cash flow data to day level forecast cash flow data when at least one of: the holiday data, the historical cash flow data, and the week level forecast cash flow data are generated from the one or more inputs, using the machine learning model. The ML-based computing method further includes providing an output of at least one of: the month level forecast cash flow data, the week level forecast cash flow data, and the day level forecast cash flow data to the one or more users on a user interface associated with one or more electronic devices.

In an embodiment, the forecast cash flow data are generated by (a) determining a growth factor in at least one of: a week level and a month level based on at least one of: the historical cash flow data and the forecast period inputted by the one or more users, (b) determining average cash flow data in at least one of: a week level and a month level based on at least one of: the historical cash flow data, the forecast period, the lookback period received from the one or more users, and the determined growth factor, and (c) generating the month level forecast cash flow data and the week level forecast cash flow data for the forecast period using the machine learning model. The growth factor is determined by computing a ratio of the historical cash flow data for a selected month or week between previous years based on the forecast period inputted by the one or more users.

In another embodiment, the machine learning model includes a regression-based machine learning model for generating the forecast cash flow data and generating the forecast cash flow data includes dynamically assigning weightages to the average cash flow data and the growth factor and multiplying the weighted average cash flow data and the weighted growth factor to generate the forecast cash flow data for the forecast period inputted by the one or more users.

In yet another embodiment, dynamically assigning the weightages to the average cash flow data and the growth factor includes (a) segmenting the historical cash flow data based on at least one of: a geographic location, an industry, a business segment, a legal entity, a type of transactions, a payment method, a product, a service, a customer, a sales channel, time and a currency, (b) generating a growth factor dataset by computing the growth factor for a plurality of permutations and combinations of the historical cash flow data and the forecast period, (c) generating an average cash flow dataset by computing the average cash flow data for a plurality of permutations and combinations of the historical cash flow data, the forecast period, and the growth factor, and (d) correlating the historical cash flow data with the generated growth factor dataset and the average cash flow dataset.

In yet another embodiment, the historical cash flow data are segmented based on at least one of: (a) the geographic location comprising at least one of: a country, a region, a state, a city, and a zip or postal code, (b) the industry comprising at least one of: a healthcare, a retail, technology, manufacturing, financial services, transportation, hospitality, pharmaceutical, energy, construction, agriculture, entertainment, education, telecommunications, aerospace, defense, chemicals, government, and business services, (c) the business segment comprising at least one of: a product line, a geography, a customer group, and a service type, (d) the legal entity comprising at least one of: a parent company, subsidiaries, joint ventures, and partnerships, (e) the type of transaction comprising at least one of: purchase, sale, lease, rental, financing, and investment, (f) the payment method comprising at least one of: a cash, a cheque, a credit card, and an electronic transfer, which tracks payment trends and manages a cash flow, (g) the product or service comprising at least one of: a product line, a service line, a brand, a model, or a stock keeping unit (SKU), (h) the customer comprising at least one of: a demographics, a behavior, buying patterns, preferences, and a customer lifetime value, (i) the sales channel comprising at least one of: an online, a retail, a wholesale, direct and through intermediaries, (j) the time comprising at least one of: a day, a week, a month, a quarter, a year, an hour and a minute, and (k) the currency used in finance transactions.

In yet another embodiment, the machine learning model includes the regression-based machine learning model for converting the month level forecast cash flow data to the week level forecast cash flow data and converting the month level forecast cash flow data to the week level forecast cash flow data includes (a) computing a plurality of weeks and a partial week of a month in at least one of: a backward direction and a forward direction, (b) generating a plurality of permutations of the plurality of weeks and the partial week of the month in the backward direction and the forward direction, (c) obtaining the historical cash flow data and the holiday data for at least one of: each week and the partial week of the month for the entity inputted by the one or more users for a past lookback period, (d) selecting a corresponding permutation of at least one of: each week and the partial week of the month based on the historical cash flow data using a machine learning algorithm, (e) computing a weightage for the selected permutation of at least one of: each week and the partial week of the month based on the historical cash flow data at the week level and the holiday data using the machine learning algorithm, and (f) generating the week level forecast cash flow data by multiplying the month level forecast cash flow data with the weightage assigned for at least one of: each week and the partial week of the month.

In yet another embodiment, computing the weightage for the selected permutation of at least one of: each week and the partial week of the month includes (a) segmenting the historical cash flow data and the month level forecast cash flow data based on a week of the month based segmentation representing a segmentation of the forecast period based on at least one of: the plurality of weeks and the partial week of the month and (b) correlating the month level forecast cash flow data with the historical cash flow data for at least one of: each week and the partial week of the month to compute the weightage for the selected permutation of at least one of: each week and the partial week of the month.

In yet another embodiment, the machine learning model includes the regression-based machine learning model for converting the week level forecast cash flow data to the day level forecast cash flow data, and converting the week level forecast cash flow data to the day level forecast cash flow data includes (a) obtaining the historical cash flow data and the holiday data for at least one of: each week and the partial week of the month for the entity inputted by the one or more users for the past lookback period, (b) computing a weightage for each day of at least one of: each week and the partial week based on the historical cash flow data at a day level and the holiday data using the machine learning algorithm, and (c) generating the day level forecast cash flow data by multiplying the week level forecast cash flow data with the weightage computed for each day.

In yet another embodiment, computing the weightage for each day includes (a) segmenting the historical cash flow data and the week level forecast cash flow data based on a day of the week based segmentation representing a segmentation of the forecast period based on a day of the week and (b) correlating the week level forecast cash flow data with the historical cash flow data for the day to compute the weightage for each day.

In one aspect, a machine learning based (ML-based) computing system for distributing financial transactions is disclosed. The ML-based computing system includes one or more hardware processors and a memory coupled to the one or more hardware processors. The memory includes a plurality of subsystems in the form of programmable instructions executable by the one or more hardware processors.

The plurality of subsystems includes a data receiving subsystem configured to receive one or more inputs from one or more users. The one or more inputs include information related to at least one of: an entity and a lookback period. The plurality of subsystems further includes a data generation subsystem configured to generate one or more data from the one or more inputs received from the one or more users. The one or more data comprise at least one of: holiday data, historical cash flow data, and forecast cash flow data. The forecast cash flow data comprise at least one of: month level forecast cash flow data and week level forecast cash flow data.

The plurality of subsystems further includes a forecast distribution subsystem configured to convert the month level forecast cash flow data to the week level forecast cash flow data when at least one of: the holiday data, the historical cash flow data, and the month level forecast cash flow data are generated from the one or more inputs, using a machine learning model. The forecast distribution subsystem is further configured to convert the week level forecast cash flow data to day level forecast cash flow data when at least one of: the holiday data, the historical cash flow data, and the week level forecast cash flow data are generated from the one or more inputs, using the machine learning model.

The plurality of subsystems further includes a forecast output subsystem configured to provide an output of at least one of: the month level forecast cash flow data, the week level forecast cash flow data, and the day level forecast cash flow data to the one or more users on a user interface associated with one or more electronic devices.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

## BRIEF DESCRIPTION OF DRAWINGS

The disclosure will be described and explained with additional specificity and detail with the accompanying figures in which:

FIG. 1 is a block diagram illustrating a computing environment with a machine learning based (ML-based) computing system for forecasting financial transactions, in accordance with an embodiment of the present disclosure;

FIG. 2 is a detailed view of the ML-based computing system forecasting the financial transactions, in accordance with another embodiment of the present disclosure;

FIG. 3 is a graphical representation illustrating a comparison between actual (i.e., historical) cash flow data and a predicted (i.e., forecasted) cash flow data of the financial transaction of an entity at a week level, in accordance with an embodiment of the present disclosure;

FIG. 4 is a graphical representation illustrating a comparison between the actual cash flow data and the predicted cash flow data of the financial transaction of the entity at a month level, in accordance with an embodiment of the present disclosure;

FIG. 5 is a graphical representation illustrating a comparison between the actual cash flow data, a cumulative rolling average cash flow data, and cash flow data using a prophet model at weekly over time, in accordance with an embodiment of the present disclosure;

FIG. 6 is a graphical representation illustrating a comparison between the actual cash flow data, cash flow data using a rolling average model, and cash flow data using a growth factor at weekly over time, in accordance with an embodiment of the present disclosure;

FIG. 7 is a graphical representation illustrating a comparison between the actual cash flow data, the cash flow data using the prophet model, and cash flow data using a seasonal average model at weekly over time, in accordance with another embodiment of the present disclosure;

FIG. 8 is a graphical representation illustrating a back testing comparison between the actual cash flow data, the cash flow data using the prophet model, and the cash flow data using the rolling average model for depicting forecast cash flow data in at least one of: a week level and a month level, in accordance with an embodiment of the present disclosure;

FIG. 9 is a graphical representation illustrating a back testing comparison between the actual cash flow data, pro-rata cash flow data, and the cash flow data using the prophet model for depicting forecast cash flow data in a day level, in accordance with an embodiment of the present disclosure;

FIG. 10 is a graphical representation illustrating a comparison between the actual cash flow data and the forecasted cash flow data for depicting a forecast accuracy at a week level, in accordance with an embodiment of the present disclosure;

FIG. 11 is a flow diagram illustrating a ML-based computing method for forecasting the financial transactions, in accordance with an embodiment of the present disclosure;

FIG. 12 is a detailed view of the ML-based computing system for distributing the financial transactions, in accordance with another embodiment of the present disclosure;

FIG. 13 is a flow chart illustrating an exemplary code flow for creating mapper values, in accordance with an embodiment of the present disclosure;

FIGS. 14A-14B are block diagrams illustrating an exemplary computation of pro-rata for a week of month in backward and forward directions, in accordance with an embodiment of the present disclosure;

FIG. 15A is a block diagram illustrating an exemplary monthly pro-rata with an input and output, in accordance with an embodiment of the present disclosure;

FIG. 15B is a block diagram illustrating an exemplary monthly pro-rata, in accordance with an embodiment of the present disclosure;

FIG. 16A is a graphical representation illustrating a comparison between the actual cash flow data, pro-rata cash flow data, and the prophet model for depicting day level forecast cash flow data, in accordance with an embodiment of the present disclosure;

FIG. 16B is a graphical representation illustrating a comparison between the actual cash flow data, pro-rata cash flow data, and the prophet model for depicting week level forecast cash flow data, in accordance with an embodiment of the present disclosure; and

FIG. 17 is a flow chart illustrating a ML-based method for distributing the financial transactions based on the sparse data, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

## DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

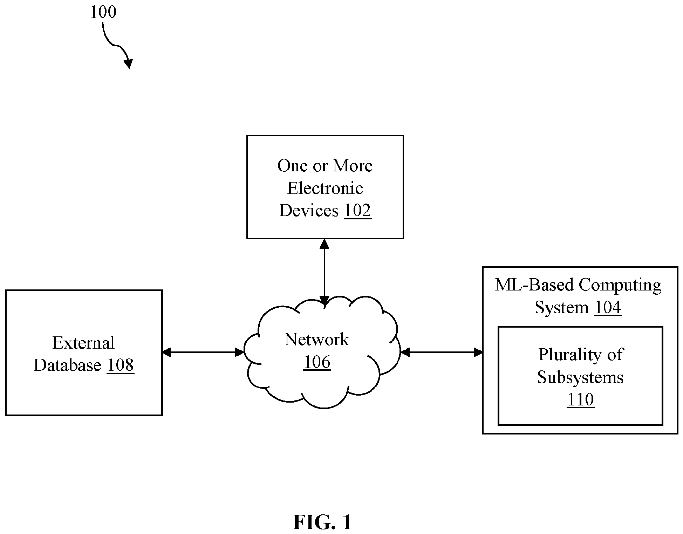

Referring now to the drawings, and more particularly to FIG. 1 through FIG. 17, where similar reference characters denote corresponding features consistently throughout the figures, there are shown preferred embodiments and these embodiments are described in the context of the following exemplary system and/or method.

FIG. 1 is a block diagram illustrating a computing environment 100 with a machine learning based (ML-based) computing system 104 for forecasting financial transactions, in accordance with an embodiment of the present disclosure. According to FIG. 1, the computing environment 100 includes one or more electronic devices 102 that are communicatively coupled to the ML-based computing system 104 through a network 106. The one or more electronic devices 102 through which one or more users provide one or more inputs to the ML-based computing system 104. In an embodiment, the one or more users may include at least one of: one or more analysts, business analysts, cash analysts, financial analysts, and the like. The present invention generates forecasted cash flow data in at least one of: a week, a month, a quarter and a year level based on the one or more inputs including information related to at least one of: an entity and a forecast period for sparse data sets with unique trend and cyclicity. The present invention further converts/distributes the forecasted cash flow data in at least one of: the week, the month, the quarter and the year level to forecast cash flow data in at least one of: a week and a day level. Further, the ML-based computing system 104 measures an accuracy of the forecast cash flow data weekly or monthly depending on the sparse nature of data.

Initially, the ML-based computing system 104 receives the one or more inputs from the one or more users. The one or more inputs include the information related to at least one of: the forecast period and the entity. The selected entity may represent at least one of: a parent company, subsidiaries, joint ventures, partnerships, and any other legal entity. The forecast period is a time period (i.e., a day, a week, a month, and a year) during which the cash flow data is predicted/forecasted. The ML-based computing system 104 further generates cash flow data including at least one of: historical cash flow data and real-time cash flow data, based on the one or more inputs received from the one or more users. The ML-based computing system 104 further determines a growth factor in at least one of: a week level and a month level based on at least one of: the historical cash flow data and the forecast period. The ML-based computing system 104 further determines average cash flow data in at least one of: a week level and a month level based on at least one of: the historical cash flow data, the forecast period, a lookback period received from the one or more users, and the determined growth factor.

The ML-based computing system 104 further generates the forecast cash flow data in at least one of: the week level, the month level, the quarter level and the year level for the forecast period using a machine learning model. In an embodiment, the forecast cash flow data in at least one of: the week level, the month level, and the year level may be referred to at least one: month level forecast cash flow data and week level forecast cash flow data. The ML-based computing system 104 further provides an output of the forecast cash flow data to the one or more users on a user interface associated with the one or more electronic devices 102. The ML-based computing system 104 further converts/distributes the forecast cash flow data in at least one of: the week level, the month level, the quarter level and the year level to forecast cash flow data in at least one of: the week level and the day level using the machine learning model. In an embodiment, the forecast cash flow data in at least one of: the week level and the day level may be referred to at least one of: week level forecast cash flow data and day level forecast cash flow data. The ML-based computing system 104 further provides an output of the forecast cash flow data in at least one of: the week level and the day level to the one or more users on a user interface associated with the one or more electronic devices 102.

The ML-based computing system 104 may be hosted on a central server including at least one of: a cloud server or a remote server. Further, the network 106 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more electronic devices 102 may include at least one of: a laptop computer, a desktop computer, a tablet computer, a Smartphone, a wearable device, a Smart watch, and the like.

Further, the computing environment 100 includes an external database 108 communicatively coupled to the ML-based computing system 104 through the network 106. Furthermore, the one or more electronic devices 102 include at least one of: a local browser, a mobile application, and the like. Furthermore, the one or more users may use a web application through the local browser, the mobile application to communicate with the ML-based computing system 104. In an embodiment of the present disclosure, the ML-based computing system 104 includes a plurality of subsystems 110.

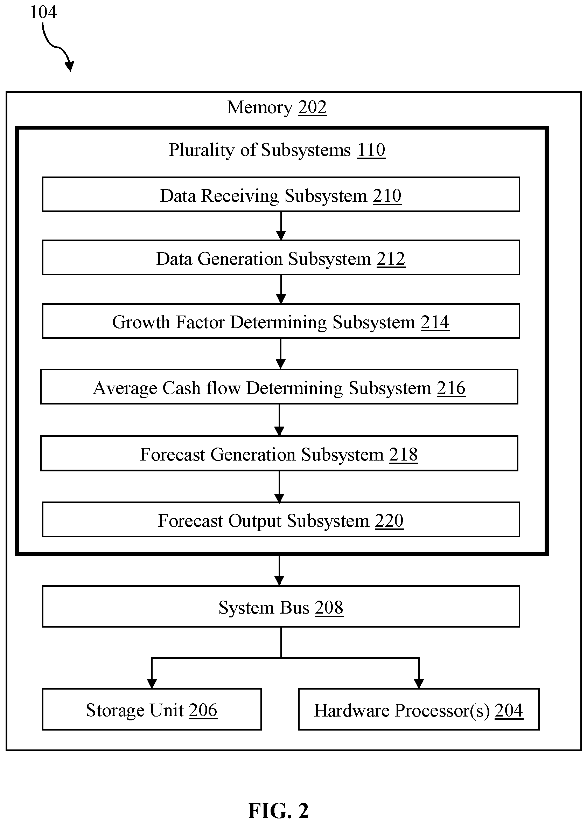

Details on the plurality of subsystems 110 have been elaborated in subsequent paragraphs of the present description with reference to **FIG. 2.**

**FIG. 2** is a detailed view of the ML-based computing system 104 for forecasting financial transactions, in accordance with an embodiment of the present disclosure. The ML-based computing system 104 includes a memory 202, one or more hardware processors 204, and a storage unit 206. The one or more hardware processors 204, the memory 202 and the storage unit 206 are communicatively coupled through a system bus 208 or any similar mechanism. The memory 202 includes the plurality of subsystems 110 in the form of programmable instructions executable by the one or more hardware processors 204.

The plurality of subsystems 110 includes a data receiving subsystem 210, a data generation subsystem 212, a growth factor determining subsystem 214, an average cash flow determining subsystem 216, a forecast generation subsystem 218, and a forecast output subsystem 220.

The one or more hardware processors 204, as used herein, means any type of computational circuit, including, but not limited to, at least one of: a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 204 may also include embedded controllers, including at least one of: generic or programmable logic devices or arrays, application specific integrated circuits, single-chip computers, and the like.

The memory 202 may be non-transitory volatile memory and non-volatile memory. The memory 202 may be coupled for communication with the one or more hardware processors 204, being a computer-readable storage medium. The one or more hardware processors 204 may execute machine-readable instructions and/or source code stored in the memory 202. A variety of machine-readable instructions may be stored in and accessed from the memory 202. The memory 202 may include any suitable elements for storing data and machine-readable instructions, including at least one of: read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes the plurality of subsystems 110 stored in the form of machine-readable instructions on any of the above-mentioned storage media and may be in communication with and executed by the one or more hardware processors 204.

The storage unit 206 may be a cloud storage, a Structured Query Language (SQL) data store, a noSQL database or a location on a file system directly accessible by the plurality of subsystems 110.

The plurality of subsystems 110 includes the data receiving subsystem 210 that is communicatively connected to the one or more hardware processors 204. The data receiving subsystem 210 is configured to receive the one or more inputs from the one or more users. In an embodiment, the one or more inputs include the information related to at least one of: the forecast period and the entity.

The plurality of subsystems 110 further includes the data generation subsystem 212 that is communicatively connected to the one or more hardware processors 204. The data generation subsystem 212 is configured to generate cash flow data including at least one of: the historical cash flow data and the real-time cash flow data, based on the one or more inputs received from the one or more users. In an embodiment, the data generation subsystem 212 generates the cash flow data from a plurality of external databases 108 by executing at least one of: data normalization, data anonymization, data aggregation, data analysis, data storage for future use, and the like. In another embodiment, the plurality of external databases 108 may include at least one of: relational databases, object-oriented databases, data warehouses, cloud-based databases, and the like. In yet another embodiment, a format of the cash flow data generated from the plurality of external databases 108 may include at least one of: a comma-separated values (CSV) format, a JavaScript Object Notation (JSON) format, an Extensible Markup Language (XML), spreadsheets, and the like.

The plurality of subsystems 110 further includes the growth factor determining subsystem 214 that is communicatively connected to the one or more hardware processors 204. The growth factor determining subsystem 214 is configured to determine the growth factor in at least one of: the week level and the month level based on at least one of: the historical cash flow data and the forecast period. The growth factor is determined by computing a ratio of the historical cash flow data for a selected week or month at N-2 year and N-1 year, where N represents the forecast period inputted by the one or more users.

In an example embodiment of the present disclosure, if one or more users input a forecast period of June 2023, then the growth factor determining subsystem 214 determines that the growth factor for June 2023 is the ratio of a cash flow in June 2021 and a cash flow in June 2022.

In another example embodiment of the present disclosure, if the one or more users input a forecast period between 1 June 2023 - 10 June 2023, then the growth factor determining subsystem 214 determines that the growth factor as the ratio of a cash flow between June 1 - 10, 2021 and a cash flow between June 1 - 10, 2022.

The plurality of subsystems 110 further includes the average cash flow determining subsystem 216 that is communicatively connected to the one or more hardware processors 204. The average cash flow determining subsystem 216 is configured to determine the average cash flow data in at least one of: the week level and the month level based on at least one of: the historical cash flow data, the forecast period, a lookback period received from the one or more users, and the determined growth factor. The average cash flow data are determined by multiplying the determined growth factor with average historical cash flow data for the selected week or the month between the previous years. In an embodiment, the average cash flow data may include information related to an average cash flow.

In an exemplary embodiment of the present disclosure, if the one or more users input a forecast period of June 2023 and a lookback period of 5 years, then the average cash flow determining subsystem 216 determines that the average cash flow for June 2023 is an average cash flow for June in the past 5 years multiplied by the growth factor.

In another exemplary embodiment of the present disclosure, if the one or more users input a forecast period between 1 June 2023 - 10 June 2023 and the lookback period of 5 years, then the cash flow determining subsystem 216 determines that the average cash flow for the period is an average cash flow for 1 June - 10 June in the past 5 years multiplied by the growth factor.

The plurality of subsystems 110 further includes the forecast generation subsystem 218 that is communicatively connected to the one or more hardware processors 204. The forecast generation subsystem 218 is configured to generate the forecast cash flow data in at least one of: the week level, the month level, quarter level and the year level for the forecast period using the machine learning model. In an embodiment, the machine learning model is a regression based machine learning model for generating the forecasted cash flow data. The forecast generation subsystem 218 using the regression based machine learning model dynamically assigns weightages to the average cash flow data and the growth factor. For assigning weightages to the average cash flow data and the growth factor, the regression based machine learning model is trained on the actual historical cash flow data under supervision. In an embodiment, the regression based machine learning model may be trained on a plurality of historical cash flow data that are segmented based on at least one of: a geographic location, an industry, a business segment, a legal entity, a type of transaction, a payment method, a product, a service, a customer, a sales channel, time, a currency, and the like.

In an embodiment of the present disclosure, the historical cash flow data are segmented based on at least one of: (a) the geographic location of the operations including at least one of: a country, a region, a state, a city, a zip or postal code, and the like, (b) the industry including, but not limited to, at least one of: a healthcare, a retail, technology, manufacturing, financial services, transportation, hospitality, pharmaceutical, energy, construction, agriculture, entertainment, education, telecommunications, aerospace/defense, chemicals, government, business services, and the like, (c) the business segment including at least one of: a product line, a geography, a customer group, a service type, and the like, (d) the legal entity including at least one of: a parent company, subsidiaries, joint ventures, and partnerships, adapted to comply with legal and regulatory requirements, evaluates performance of each legal entity, and the like, (e) the type of transaction including at least one of: purchase, sale, lease, rental, financing, investment, and the like, (f) the payment method including at least one of: a cash, a cheque, a credit card, an electronic transfer, which tracks payment trends and manages a cash flow, and the like, (g) the product or service including at least one of: a product line, a service line, a brand, a model, a stock keeping unit (SKU), and the like, (h) the customer including at least one of: a demographics, a behavior, buying patterns, preferences, a customer lifetime value, and the like, (i) the sales channel including at least one of: an online, a retail, a wholesale, direct and through intermediaries, and the like (j) the time including at least one of: a day, a week, a month, a quarter, a year, an hour, a minute, and the like, and (k) the currency (e.g., INR, USD, EUR, JPY, and the like) used in finance transactions.

The forecast generation subsystem 218 using the regression based machine learning model further divides the segmented historical cash flow data into two data sets including at least one of: a first training data set and a first validation data set. In the first training data set, the forecast generation subsystem 218 generates a growth factor dataset by computing the growth factor for a plurality of permutations and combinations of the historical cash flow data and the forecast period. Further, in the first training data set, the forecast generation subsystem 218 generates an average cash flow dataset by computing the average cash flow data for a plurality of permutations and combinations of the historical cash flow data, the forecast period, and the growth factor. The forecast generation subsystem 218 further correlates the historical cash flow data with the generated growth factor dataset and the average cash flow dataset in order to dynamically assign the weightages to the average cash flow and the growth factor. The first validation data set is used for testing the performance of the regression based machine learning model. Finally, the forecast generation subsystem 218 multiplies the weighted average cash flow and the weighted growth factor to generate the forecast cash flow data in at least one of: the week level, the month level, quarter level and the year level for the forecast period inputted by the one or more users.

In an embodiment, the regression based machine learning model for generating the forecasted cash flow may include at least one of: one or more simple linear regression models, a multiple linear regression model, a polynomial regression model, a support vector regression model, a decision tree regression model, a random forest regression model, and the like.

In another embodiment, the regression based ML-model may include at least one of: a light gradient boost machine (Light GBM) regression model, an extreme gradient boost (XGBoost) regression model, an autoregressive integrated moving average (ARIMA) regression model, and the like.

The extreme gradient boost (XGBoost) regression model, the ARIMA (Autoregressive Integrated Moving Average) regression model, and the light gradient boost machine (Light GBM) regression model are well-known technologies, and thus detailed description thereof is omitted.

In one embodiment, the Light GBM regression model is used for predicting the forecasted cash flow data. The Light GBM regression model is a gradient boosting framework that uses tree-based learning algorithms for regression tasks. The Light GBM regression model is designed to be efficient and scalable, particularly for datasets with a large number of features. In a regression analysis, the Light GBM regression model is configured to predict a continuous target variable based on a set of input features. The Light GBM regression model uses a set of decision trees to make these predictions, where each tree is built to correct errors of previous trees. The final prediction is obtained by taking a weighted average of the predictions from all the trees.

In one embodiment, the forecast generation subsystem 218 is configured to utilize the Light GBM regression model to predict the forecasted cash flow. The forecasted cash flow comprises an estimated amount of cash that an entity or company expects to receive in a certain time period.

The input for the forecast generation subsystem 218 includes the one or more of historical cash flow data, the output of the growth factor determining subsystem 214, and the average cash flow determining subsystem 216.

The Light GBM regression model is configured to dynamically assign weightages to the average cash flow data and the growth factor. For dynamically assigning the weightages to the average cash flow data and the growth factor, the regression-based machine learning model is configured to: (a) segment the historical cash flow data based on at least one of: the geographic location, the industry, the business segment, the legal entity, the type of transactions, the payment method, the product, the service, the customer, the sales channel, the time and the currency, (b) generate a growth factor dataset as the first training dataset by computing the growth factor for the plurality of permutations and combinations of the historical cash flow data and the forecast period, (c) generate the average cash flow dataset as the first training dataset by computing the average cash flow data for the plurality of permutations and combinations of the historical cash flow data, the forecast period, and the growth factor, and (d) correlate the historical cash flow data with the generated growth factor dataset and the average cash flow dataset.

In another embodiment, the data is pre-processed to ensure that the data are in a suitable format for input into the Light GBM regression model.

In one non-limiting embodiment, the Light GBM regression model is trained using the pre-processed input data to predict the forecasted cash flow. The Light GBM regression model uses a set of decision trees to make these predictions, where each tree is built to correct the errors of the previous trees. The final prediction is obtained by taking a weighted average of the predictions from all the trees.

In another embodiment, several hyperparameters of the Light GBM regression model are tuned to improve the performance and speed of the Light GBM regression model. The hyperparameters include, but are not limited to, at least one of: a boosting hyperparameter, a num_leaves hyperparameter, a max_depth hyperparameter, a learning _rate hyperparameter, a min_data_in_leaf hyperparameter, a feature_fraction hyperparameter, and a bagging _fraction and bagging _freq hyperparameter.

The boosting hyperparameter is configured to control the type of boosting algorithm to use. In an embodiment, the Light GBM regression model supports three types: GBDT (traditional gradient boosting decision tree), DART (dropout additive regression tree), and GOSS (gradient-based one-side sampling). The num_leaves hyperparameter is configured to control the maximum number of leaves in one tree. In an embodiment, a larger num_leaves means a more complex tree and higher accuracy, but also more risk of overfitting. The max_depth hyperparameter is configured to control the maximum depth of each tree. In an embodiment, a deeper tree can capture more complex interactions among the features, but is also more prone to overfitting.

The learning _rate hyperparameter is configured to control the learning rate or step size of each iteration. In an embodiment, a lower learning _rate means slower learning but more robust results. A higher learning_rate means faster learning but more risk of overfitting. The min_data_in_leaf hyperparameter is configured to control the minimum number of data (i.e., samples) in one leaf. In an embodiment, a higher min_data_in_leaf means more conservative tree growth, as only nodes with enough samples are split.

The feature_fraction hyperparameter is configured to control the fraction of features that are randomly sampled for each tree. In an embodiment, a lower feature_fraction means less overfitting but more underfitting. A higher feature_fraction means more overfitting but less underfitting. The bagging_fraction and bagging_freq hyperparameter is configured to control the fraction and frequency of data that are randomly sampled for each tree. In an embodiment, a lower bagging_fraction means less variance but more bias. A higher bagging _fraction means more variance but less bias. The bagging _freq controls how often bagging is performed, 0 means disable bagging.

The forecasted cash flow predicted by the Light GBM regression model transmitted to the forecast output subsystem 220, which is configured to output the forecasted cash flow on a user interface screen of one or more electronic devices 102 associated with a user.

In another alternative embodiment, the XGBoost regression model is used for predicting the forecasted cash flow. The XGBoost regression model is an open-source library that provides an efficient and effective implementation of a gradient boosting algorithm for regression problems. Gradient boosting is a technique that builds an ensemble of decision trees, where each tree tries to correct the errors made by the previous ones. The XGBoost regression model uses objective functions that contain a loss function and a regularization term to prevent overfitting. The XGBoost regression model also uses various optimization techniques including at least one of: parallelization, tree pruning, handling of missing values, and the like. The XGBoost regression model can be used for regression problems by specifying the appropriate objective function for mean squared error and root mean squared error.

In one embodiment, the forecast generation subsystem 218 uses the XGBoost regression model to predict the forecasted cash flow. The forecasted cash flow comprises an estimated amount of cash that an entity or company expects to receive in a certain time period.

The input for the forecast generation subsystem 218 includes the one or more of historical cash flow data, the output of growth factor determining subsystem, 214, and the average cash flow determining subsystem 216.

The XGBoost regression model is configured to dynamically assign weightages to the average cash flow data and the growth factor. For dynamically assigning the weightages to the average cash flow data and the growth factor, the regression-based machine learning model is configured to: (a) segment the historical cash flow data based on at least one of: the geographic location, the industry, the business segment, the legal entity, the type of transactions, the payment method, the product, the service, the customer, the sales channel, the time and the currency, (b) generate a growth factor dataset as the first training dataset by computing the growth factor for the plurality of permutations and combinations of the historical cash flow data and the forecast period, (c) generate the average cash flow dataset as the first training dataset by computing the average cash flow data for the plurality of permutations and combinations of the historical cash flow data, the forecast period, and the growth factor, and (d) correlate the historical cash flow data with the generated growth factor dataset and the average cash flow dataset.

In another embodiment, the data is pre-processed to ensure that the data are in a suitable format for input into the XGBoost regression model.

In one non-limiting embodiment, the XGBoost regression model is trained using the pre-processed input data to predict the forecasted cash flow. The XGBoost regression model uses a set of decision trees to make these predictions, where each tree is built to correct the errors of the previous trees. The final prediction is obtained by taking a weighted average of the predictions from all the trees.

In another embodiment, several hyperparameters of the XGBoost regression model are tuned to improve the performance and speed of the regression model. The hyperparameters include, but are not limited to, at least one of: an eta hyperparameter, a max_depth hyperparameter, a gamma hyperparameter, a min_child_weight hyperparameter, a subsample hyperparameter, and colsample_bytree, colsample_bylevel, colsample_bynode hyperparameters.

The eta (also called learning_rate) hyperparameter is configured to control the learning rate or step size of each iteration. In an embodiment, a lower eta means slower learning but more robust results. A higher eta means faster learning but more risk of overfitting. The max_depth hyperparameter is configured to control the maximum depth of each tree. In an embodiment, a deeper tree can capture more complex interactions among the features, but also more prone to overfitting.

The gamma hyperparameter is configured to control the minimum loss reduction required to make a further split on a leaf node. In an embodiment, a higher gamma means more conservative tree growth, as only strong splits are made. The min_child_weight hyperparameter is configured to control the minimum sum of instance weight (i.e., hessian) needed in a child node. In an embodiment, a higher min_child_weight means the algorithm is more selective about splitting, as only nodes with enough samples are split.

The subsample hyperparameter is configured to control the fraction of training data that is randomly sampled for each tree. In an embodiment, a lower subsample means less variance but more bias. A higher subsample means more variance but less bias. The colsample_bytree, colsample_bylevel, colsample_bynode hyperparameters are configured to control the fraction of features that are randomly sampled for each tree, each level, and each split respectively. In an embodiment, a lower colsample means less overfitting but more underfitting. A higher colsample means more overfitting but less underfitting.

The forecasted cash flow predicted by the XGBoost regression model transmitted to the forecast output subsystem 220, which is configured to output the forecasted cash flow on a user interface screen of one or more electronic devices 102 associated with a user.

In one embodiment, the autoregressive integrated moving average (ARIMA) regression model is used for predicting the forecasted cash flow. The ARIMA regression model is a time series forecasting machine learning model that combines autoregressive (AR), differencing (I), and moving average (MA) components. The ARIMA regression model is used to predict future values based on past observations of a time series data. The autoregressive (AR) component models the relationship between an observation and a certain number of lagged observations (i.e., previous values) in the time series. The ARIMA regression model uses the dependent relationship between the observation and its lagged values to predict future values. The "p" parameter represents the order of the autoregressive component and indicates how many lagged observations are considered. The moving average (MA) component models the dependency between an observation and a residual error from a moving average model applied to lagged observations. The ARIMA regression model helps to capture the random fluctuations in the time series. The "q" parameter represents the order of the moving average component and indicates how many lagged residuals are considered. The integration (I) component is used when differencing is applied to the time series to make it stationary. The differencing operation removes trends or seasonality, resulting in an integrated series. The "d" parameter represents the order of differencing and indicates how many times differencing is performed.

The appropriate values for the ARIMA parameters (p, d, q) need to be determined. This is typically done by analyzing the autocorrelation function (ACF) and partial autocorrelation function (PACF) plots of the differenced time series. These partial autocorrelation function (PACF) plots help to identify the appropriate lag values for the AR and MA components. Once the parameters are determined, the ARIMA regression model is fitted to the training data using techniques like maximum likelihood estimation. This involves estimating the coefficients of the AR and MA terms to minimize the difference between the predicted values and the actual values.

After the ARIMA regression model is fitted, the ARIMA regression model can be used to make predictions for future values of the time series. The forecasted values are generated by using the estimated coefficients along with the lagged values and residual errors. The accuracy of the ARIMA regression model can be evaluated using one or more statistical measures including at least one of: mean absolute error (MAE), mean squared error (MSE), root mean squared error (RMSE), and the like. These metrics help assess how well the ARIMA regression model performs in predicting the future values of the time series.

In one embodiment, the forecast generation subsystem 218 is configured to utilize the ARIMA regression model to predict the forecasted cash flow. The forecasted cash flow comprises an estimated amount of cash that an entity or company expects to receive in a certain time period.

The input for the forecast generation subsystem 218 includes the one or more of historical cash flow data, the output of growth factor determining subsystem 214, and the average cash flow determining subsystem 216.

The ARIMA regression model is configured to dynamically assign weightages to the average cash flow data and the growth factor. For dynamically assigning the weightages to the average cash flow data and the growth factor, the regression-based machine learning model is configured to: (a) segment the historical cash flow data based on at least one of: the geographic location, the industry, the business segment, the legal entity, the type of transactions, the payment method, the product, the service, the customer, the sales channel, the time and the currency, (b) generate a growth factor dataset as the first training dataset by computing the growth factor for the plurality of permutations and combinations of the historical cash flow data and the forecast period, (c) generate the average cash flow dataset as the first training dataset by computing the average cash flow data for the plurality of permutations and combinations of the historical cash flow data, the forecast period, and the growth factor, and (d) correlate the historical cash flow data with the generated growth factor dataset and the average cash flow dataset.

In another embodiment, the data is pre-processed to ensure that the data are in a suitable format for input into the ARIMA regression model.

In one non-limiting embodiment, the ARIMA regression model is trained using the pre-processed input data to predict the forecasted cash flow.

The forecasted cash flow predicted by ARIMA regression model transmitted to the forecast output subsystem 220, which is configured to output the forecasted cash flow on a user interface screen of one or more electronic devices 102 associated with a user.

The plurality of subsystems 110 further includes the forecast output subsystem 220 that is communicatively connected to the one or more hardware processors 204. The forecast output subsystem 220 is configured to provide an output of the forecast cash flow data in at least one of: the week level, the month level, the quarter level, and the year level to the one or more users on the user interface associated with the one or more electronic devices 102.

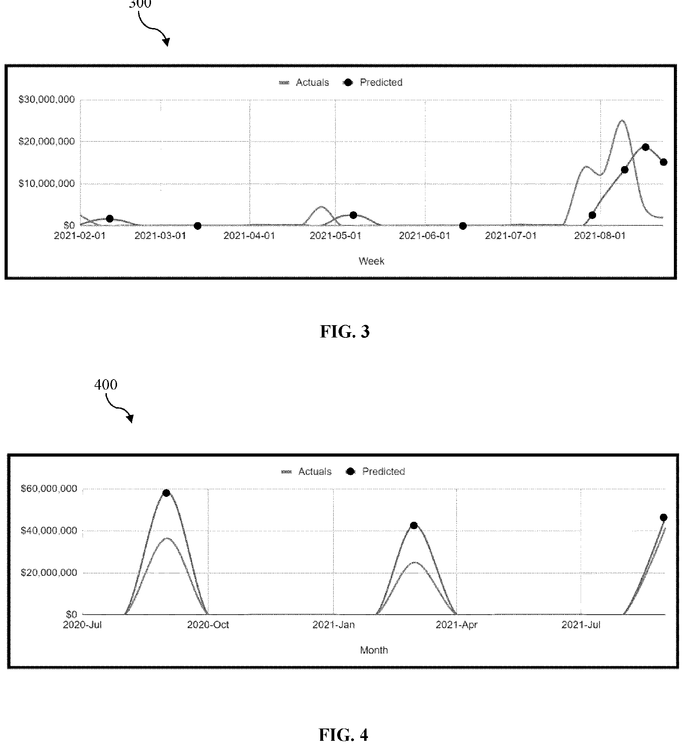

FIG. 3 is a graphical representation 300 illustrating a comparison between the historical cash flow data (i.e., actual cash flow data) and the predicted cash flow data (i.e., forecasted cash flow data) at a week level of the financial transaction of the entity, in accordance with an embodiment of the present disclosure. The graphical representation 300 depicts that the forecast cash flow data for 180 days from the given rundate (i.e., the forecast period inputted by the one or more users) is generated at the week level.

FIG. 4 is a graphical representation illustrating a comparison between the actual cash flow data and the predicted cash flow data of the financial transaction of the entity at a month level, in accordance with an embodiment of the present disclosure. The graphical representation 400 depicts that the forecast cash flow data for the 180 days from the given rundate is generated at the month level.

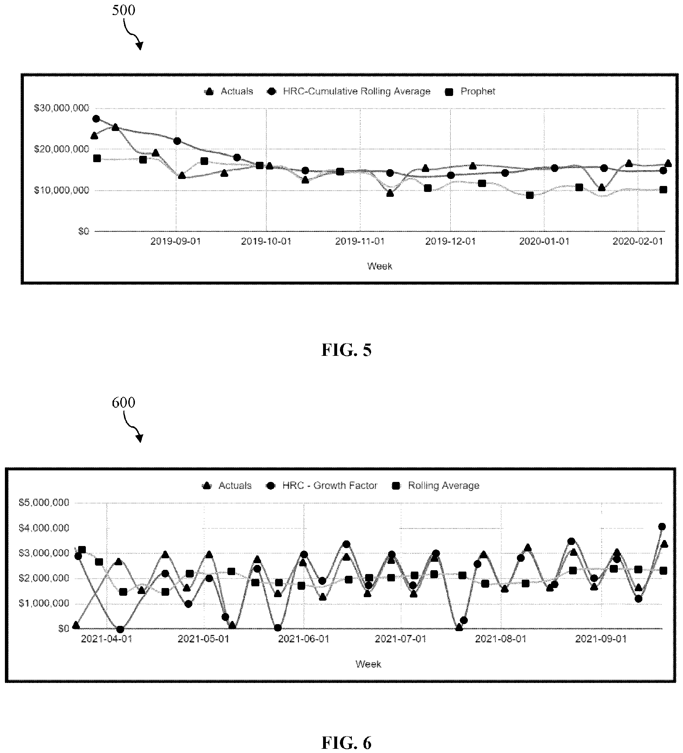

FIG. 5 is a graphical representation 500 illustrating a comparison between the actual cash flow data, a cumulative rolling average cash flow data, and cash flow data using a prophet model at weekly over time, in accordance with an embodiment of the present disclosure. The graphical representation 500 depicts that the forecast cash flow data for a particular week from the rundate week (RW) is computed by receiving an average of a lookback number of rolling window sum (RWS) values of the cash flow data before the rundate, where a window size is equal to the number of weeks from the rundate to forecast or a horizon value (n). An average value is subtracted from the previous cumulative week forecast to obtain a split week forecast. The split week forecast for a particular week from the rundate is computed as follows,

$$\text{Forecast for (RW + n) week} = \text{(RW + n) week average} - \text{(RW + n - 1) week average}$$

$$\ldots\ldots\ldots \text{ equation (1)}$$

Where the (RW+n) week average is the average value of (RW+n) average or the average of 0-(n) weeks value and computed as follows,

$$\text{(RW + n) week average} = \text{Average (RWS, RWS-1,\ldots,RWS-lookback)}\ldots\ldots\text{equation}$$

$$(2)$$

Where the RWS is the rolling window sum. The rolling window is computed as follows, Rolling window sum (RWS) for a week (w) = Actuals (w)+ Actuals (w+1)+...+Actuals (w+x)

Where the RW is a rundate week, n is a number of weeks or horizon value, the RW+n is "n" weeks from rundate week, the RWS is the rolling window sum, the RWS-x is the rolling window sum of 'x' weeks before the rundate week. The Actuals (w+x) is the sum of actuals for the week 'w' to week 'w+x'.

In an embodiment, the below Table (1) provides the observations on back tested results for cumulative rolling average comparison.

**TABLE. 1**

| Model | Weekly WAA | Monthly WAA | 90 percentile Error % | 70 percentile Error % |
|---|---|---|---|---|
| Prophet | 80.1% | 81.9% | 59.8% | 51.4% |
| Machine Learning based method of present invention | 89.01% | 92.28% | 29.86% | 16.91% |

In an embodiment, the cumulative rolling average performs better in a weighted average accuracy (WAC) for both over time weekly as well as monthly accuracy with improvements of 8.91% and 10.38% respectively. The cumulative rolling average prominent from the 90% and 75% percentile of the error percentage that of all the observations on average cumulative rolling average. The cumulative rolling average has the error percentage less than and equal to 29.86% for 90%, 16.91 for 75% of the recorded observations, which is 29.94% less for 90 percentile and 34.94% for 75 percentile.

**FIG. 6** is a graphical representation 600 illustrating a comparison between the actual cash flow data, cash flow data using a rolling average model, and cash flow data using a growth factor at weekly over time, in accordance with an embodiment of the present disclosure. According to **FIG. 6,** the forecast for the particular week and the month is a product average of actual bankcash for the particular week and the month in 'N' previous years and the growth factor. The growth factor for the particular week and the month is computed by receiving the ratio between actual bankcash of the previous two years for the corresponding week and the month. Following is the equation (4) to compute the weekly forecast cash flow data - Forecast= Average (Bankcash Year = RY-1, week=RW), Bankcash (year=RY-2, week=RW)....)*  (Growth Factor)                    equation (4)

Growth factor= Bankcash (year= RY-1, week = RW)/Bankcash (year = RY -2, month = RW)          equation (5)

In an embodiment, RW is run week, RY is run year, RY-m is run week -'m' years.

In an embodiment, following is the equation (6) to compute the monthly forecast cash flow data Forecast= Average (Bankcash (year= RY-1, month=RM), Bankcash(year=RY-2,month = RM).....)  *Growth factor                    equation (6)

$$\text{Growth Factor = Bankcash (year=RY-1, month= RM)/Bankcash (year = RY-2, month = RM)} \qquad \text{equation (7)}$$

Where, RM is run month, RY is run year, RY-m is run month - 'm' years.

In an embodiment, the Table (2) provides observations on back tested results for growth factor comparison.

**TABLE. 2**

| Model | Weekly WAA | Monthly WAA | 90 percentile error % | 75 percentile error % |
|---|---|---|---|---|
| Rolling average | 55.59% | 87.56% | 100.0% | 57.52% |
| HRC growth factor | 78.54% | 80.35% | 100.0% | 35.13% |

In an embodiment, the growth factor performs better in the weighted average accuracy (WAA) for both the over time weekly as well as the monthly accuracy. The growth factor is also prominent from the 90 percentile and 75 percentile of the error percentage that of all the observations on average the cumulative rolling average has errors less than and equal to 35.13% for 75 percentile of the recorded observations which is 22.52% for 75 percentile with respect to the rolling average. Further, the growth factor is also visible from the graphical representation 600 in **FIG. 6** that the cyclicity i.e., the crest and trough are captured better by the growth factor model.

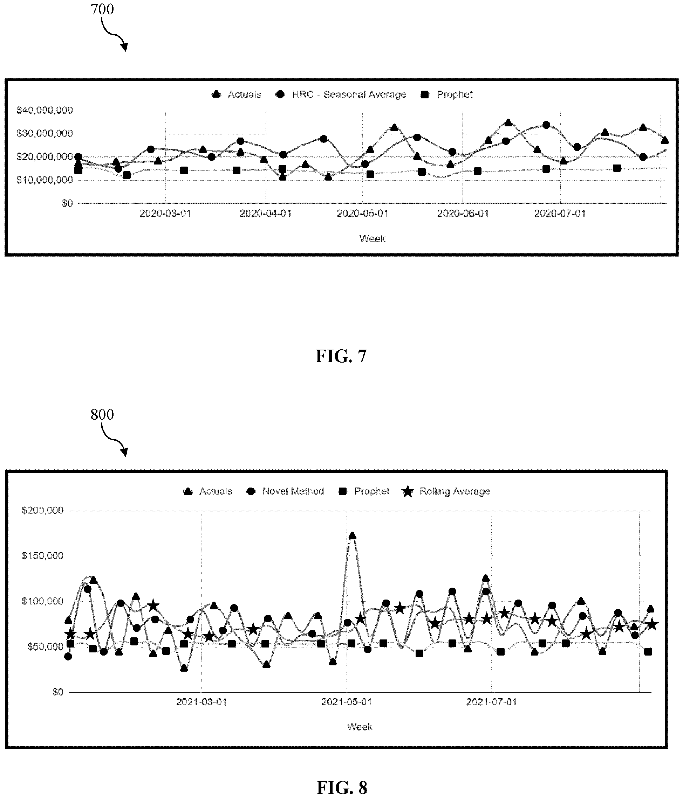

**FIG. 7** is a graphical representation 700 illustrating a comparison between the actual cash flow data, the cash flow data using the prophet model, and cash flow data using a seasonal average model at weekly over time, in accordance with another embodiment of the present disclosure. According to **FIG. 7,** the seasonal average is an average amount for the run week based on the actual bankcash for the particular run week in the previous years in order to include a seasonality factor. The seasonal average value is computed for each week based on the past two years with four lookback from the running week for each two years on the basis of the following equation.

$$\text{4 week LB SEV for RW = for each past two year } (0.5*(\text{RW-2}), \text{RW-1}, \text{RW}, \text{RW+1}, (\text{RW+2}) * 0.5)/8 \qquad \text{equation (8)}$$

Where, SEV is a seasonal expected value, NW LB is 'N' week lookback, RW is run week and RW- 'm' is run week - 'm' weeks.

In an embodiment, below Table (3) shows the observations on back tested results for HRC seasonal average comparison.

**TABLE. 3**

| Model | Weekly WAA | Monthly WAA | 90 percentile error % | 75 percentile error % |
|---|---|---|---|---|
| Prophet | 63.4% | 62.2% | 100% | 91.0% |
| HRC seasonal average | 80.48% | 87.68% | 39.15% | 29.27% |

In an embodiment, the seasonal average performs at a better level in the weighted average accuracy (WAA) for both the over time weekly as well as the monthly accuracy by 17.08% and 25.48% respectively with respect to prophet. The seasonal average is also prominent from the 90 percentile and 75 percentile of the error percentage on average. The cumulative rolling average has errors less than and equal to 39.15% for 90% and 29.27% for 75% of the recorded observations which is 60.85% less for 90 percentile and 61.73% for 75 percentile.

In an embodiment, a major reduction in the 90 percentile error % is due to the ability of the seasonal average to capture the cyclicity i.e., the crest and troughs which can also be visibly observable from the graphical representation 700.

**FIG. 8** is a graphical representation 800 illustrating a back testing comparison between the actual cash flow data, the cash flow data using the prophet model, and the cash flow data using the rolling average model for depicting the forecast cash flow data in at least one of: the week level and the month level, in accordance with an embodiment of the present disclosure. Below Table (4) shows the observations on the back tested forecast.

**TABLE. 4**

| Models | Weekly WAA | Monthly WAA | Mean | Std | 90 percentile error % | 75 percentile error % |
|---|---|---|---|---|---|---|
| Actuals | - | - | $76,089 | $30,482 | - | - |
| Rolling average | 57.81% | 80.16% | $74,727 | $12,172 | 54.99% | 43.71% |

(continued)

| Models | Weekly WAA | Monthly WAA | Mean | Std | 90 percentile error % | 75 percentile error % |
|---|---|---|---|---|---|---|
| Prophet | 60.5% | 71.0% | $52,773 | $3,754 | 100% | 73.4% |
| ML-based Computing method of present disclosure (Novel sparse TS) | 63.11% | 84.48% | $75,039 | $21,048 | 47.47% | 31.96% |

The weekly and monthly accuracy as well as the 90%tile and 75%tile of error percentage is better with respect to the Prophet and Rolling average. The standard deviation of ML-based computing method of present disclosure is closest to the actual standard deviation along with the mean indicating better capture of the cyclicity. The Weighted average accuracy is better by 13.48% and 4% for prophet and rolling average monthly and 2.61% and 5.3% for prophet and rolling average weekly. The 90%tile has improvement for ML-based computing method of present disclosure by 52.53% and 7.52% for prophet and rolling average and 75%tile has improvement for ML-based computing method of present disclosure by 41.44% and 11.78% for prophet and rolling average respectively.

In an embodiment, the Table (4) shows the lack of cyclicity or effects of seasonality in the above mentioned results in case of the rolling average and the prophet. The magnitude in the cyclicity can be measured through standard deviation. The weekly and monthly accuracy as well as the 90 percentile and 75 percentile of error percentage are better with respect to the prophet and rolling average. The standard deviation of the ML-based computing method (the novel sparse TS) is closest to the actual standard deviation along with mean indicating better capture of the cyclicity. The weighted average accuracy is better by 13.48% and 4% for the prophet and the rolling average monthly and 2.61% and 5.3% for the prophet and the rolling average weekly. The 90 percentile has improvement for the ML-based computing method by 52.53% and 7.52% for the prophet and the rolling average and 75 percentile has improvement for the ML-based computing method by 41.44% and 11.78% for the prophet and the rolling average respectively.

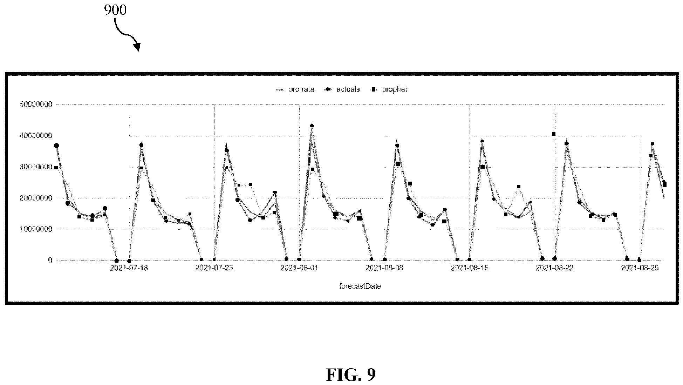

**FIG. 9** is a graphical representation 900 illustrating a back testing comparison between the actual cash flow data, pro-rata cash flow data, and the cash flow data using the prophet model for depicting forecast cash flow data in a day level, in accordance with an embodiment of the present disclosure. A below table (5) shows a weighted accuracy compared to the prophet model and the ML-based computing method.

| | Prophet Model | Method of present invention |
|---|---|---|
| Weighted Accuracy | 85% | 92% |

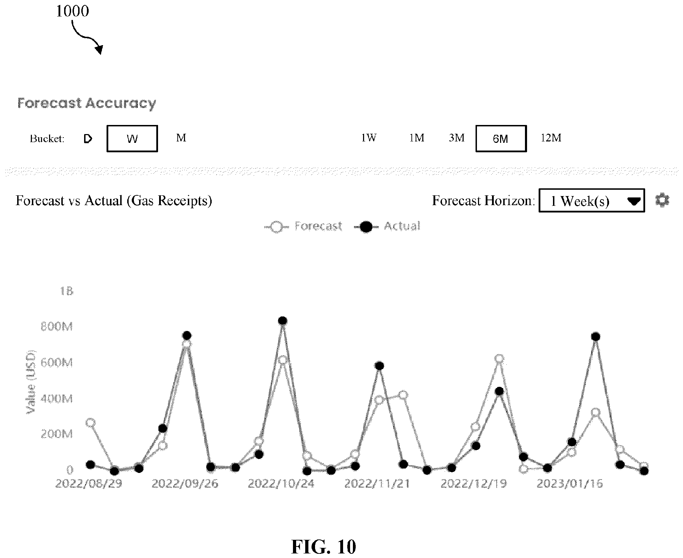

**FIG. 10** is a graphical representation 1000 illustrating a comparison between the actual cash flow data and the forecasted cash flow data for depicting a forecast accuracy at a week-level, in accordance with an embodiment of the present disclosure. **FIG. 10** depicts that the present invention has a very high accuracy in forecasting the cash flow when compared with actual cash flow.

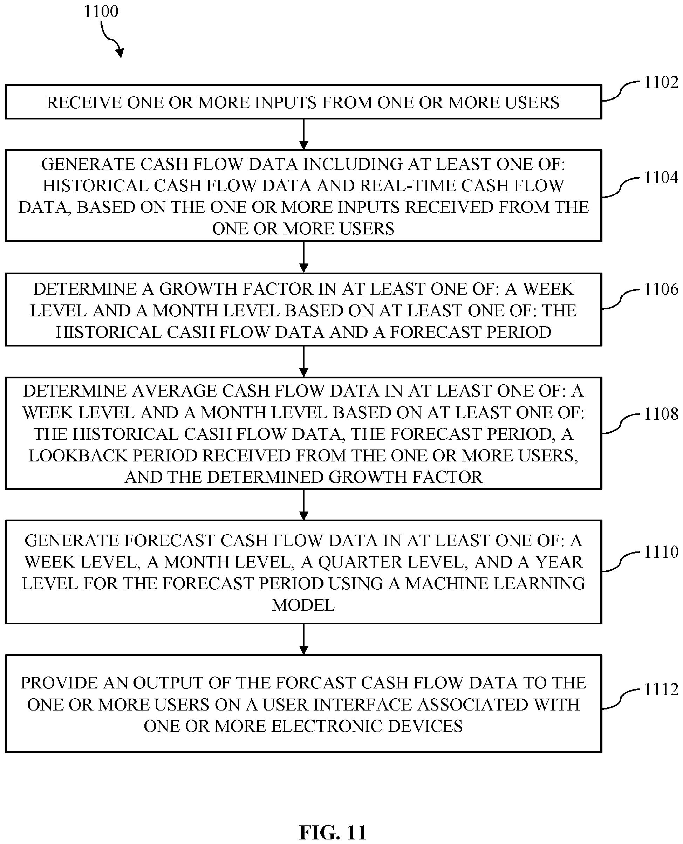

**FIG. 11** is a flow diagram illustrating the ML-based computing method 1100 for forecasting the financial transactions, in accordance with an embodiment of the present disclosure. At step 1102, the one or more inputs are received from the one or more users. In an embodiment, the one or more inputs include the information related to at least one of: the forecast period and the entity.

At step 1104, the cash flow data is generated from the plurality of external databases 108 based on the one or more inputs received from the one or more users. In an embodiment, the cash flow data include at least one of: the historical cash flow data and the real-time cash flow data.

At step 1106, the growth factor in at least one of: the week level and the month level is determined based on at least one of: the historical cash flow data and the forecast period. In an embodiment, the growth factor is determined by computing the ratio of the historical cash flow data for the selected week or month between previous years based on the forecast period inputted by the one or more users.

At step 1108, the average cash flow data in at least one of: the week level and the month level are determined based on at least one of: the historical cash flow data, the forecast period, the lookback period received from the one or more users, and the determined growth factor. In an embodiment, the average cash flow data are determined by multiplying the determined growth factor with average historical cash flow data computed for the selected week or month between the previous years.

At step 1110, the forecast cash flow data in at least one of: the week level, the month level, the quarter level, and the year level are determined for the forecast period using the machine learning model. In an embodiment, the machine learning model includes the regression-based machine learning model for generating the forecast cash flow data in at least one of: the week level, the month level, the quarter level, and the year level. In an embodiment, the regression-based machine learning model dynamically assigns weightages to the average cash flow data and the growth factor. For dynamically assigning the weightages to the average cash flow data and the growth factor, the regression-based machine learning model (a) segments the historical cash flow data based on at least one of: the geographic location, the industry, the business segment, the legal entity, the type of transactions, the payment method, the product, the service, the customer, the sales channel, the time and the currency, (b) generates a growth factor dataset as the first training dataset by computing the growth factor for the plurality of permutations and combinations of the historical cash flow data and the forecast period, (c) generates the average cash flow dataset as the first training dataset by computing the average cash flow data for the plurality of permutations and combinations of the historical cash flow data, the forecast period, and the growth factor, and (d) correlates the historical cash flow data with the generated growth factor dataset and the average cash flow dataset. Further, the regression-based machine learning model multiplies the weighted average cash flow data and the weighted growth factor to generate the forecast cash flow data in at least one of: the week level, the month level, the quarter level, and the year level for the forecast period inputted by the one or more users.

At step 1112, the output of the forecast cash flow data in at least one of: the week level, the month level, the quarter level, and the year level is provided to the one or more users on the user interface associated with the one or more electronic devices 102.

The ML-based computing method 1100 may include a step of: converting the forecast cash flow data in at least one of: the week level, the month level, the quarter level, and the year level to the forecast cash flow data in at least one of: the week level and the day level using the machine learning model. In other words, the month level forecast cash flow data is converted to the week level forecast cash flow data and then to the day level forecast cash flow data. In an embodiment, the machine learning model includes the regression-based machine learning model for converting the month level forecast cash flow data to the week level forecast cash flow data when at least one of: the holiday data, the historical cash flow data, and the month level forecast cash flow data are generated from the one or more inputs, using a machine learning model. For converting the month level forecast cash flow data to the week level forecast cash flow data, the regression-based machine learning model is configured to: (a) compute a plurality of weeks and a partial week of a month in at least one of: a backward direction and a forward direction, (b) generate a plurality of permutations of the plurality of weeks and the partial week of the month in the backward direction and the forward direction, (c) obtain the historical cash flow data and the holiday data for at least one of: each week and the partial week of the month for the entity inputted by the one or more users for a past lookback period, (d) select a corresponding permutation of at least one of: each week and the partial week of the month based on the historical cash flow data using a machine learning algorithm, (e) compute a weightage for the selected permutation of at least one of: each week and the partial week of the month based on the historical cash flow data at the week level and the holiday data using the machine learning algorithm, (f) generate the week level forecast cash flow data by multiplying the month level forecast cash flow data with the weightage assigned for at least one of: each week and the partial week of the month.

In an embodiment, for computing the weightage for the selected permutation of at least one of: each week and the partial week of the month, the regression-based machine learning model is configured to: (a) segment the historical cash flow data and the month level forecast cash flow data based on a week of the month based segmentation representing a segmentation of the forecast period based on at least one of: the plurality of weeks and the partial week of the month and (b) correlate the month level forecast cash flow data with the historical cash flow data for at least one of: each week and the partial week of the month to compute the weightage for the selected permutation of at least one of: each week and the partial week of the month.

The ML-based computing method 1100 may further include converting the week level forecast cash flow data to a day level forecast cash flow data when at least one of: the holiday data, the historical cash flow data, and the week level forecast cash flow data are generated from the one or more inputs, using the machine learning model. For converting the week level forecast cash flow data to a day level forecast cash flow data, the regression-based machine learning model is configured to: (a) obtain the historical cash flow data and the holiday data for at least one of: each week and the partial week of the month for the entity inputted by the one or more users for the past lookback period, (b) compute a weightage for each day of at least one of: each week and the partial week based on the historical cash flow data at a day level and the holiday data using the machine learning algorithm, and (c) generate the day level forecast cash flow data by multiplying the week level forecast cash flow data with the weightage computed for each day.

In an embodiment, for computing the weightage for each day, the regression-based machine learning model is configured to: (a) segment the historical cash flow data and the week level forecast cash flow data based on a day of the week based segmentation representing a segmentation of the forecast period based on a day of the week and (b) correlate the week level forecast cash flow data with the historical cash flow data for the day to compute the weightage for each day.

The ML-based computing method 1100 further provides the output of the week level forecast cash flow data and the day level forecast cash flow data to the one or more users on the user interface associated with the one or more electronic devices 102.

The present invention further distributes/converts month level forecast cash flow data to week level forecast cash flow data and then converts the week level forecast cash flow data to day level forecast cash flow data. The ML-based computing system 104 receives the one or more inputs from the one or more users. The one or more inputs include the information related to at least one of: an entity and a lookback period. The ML-based computing system 104 further generates one or more data from the one or more inputs received from the one or more users. In an embodiment, the one or more data comprise at least one of: holiday data, historical cash flow data, and forecast cash flow data. In another embodiment, the forecast cash flow data comprise at least one of: month level forecast cash flow data and week level forecast cash flow data. The ML-based computing system 104 further converts the month level forecast cash flow data to the week level forecast cash flow data when at least one of: the holiday data, the historical cash flow data, and the month level forecast cash flow data are generated from the one or more inputs, using a machine learning model.

The ML-based computing system 104 further converts the week level forecast cash flow data to day level forecast cash flow data when at least one of: the holiday data, the historical cash flow data, and the week level forecast cash flow data are generated from the one or more inputs, using the machine learning model. The ML-based computing system 104 further provides an output of at least one of: the month level forecast cash flow data, the week level forecast cash flow data, and the day level forecast cash flow data to the one or more users on a user interface associated with one or more electronic devices 102.

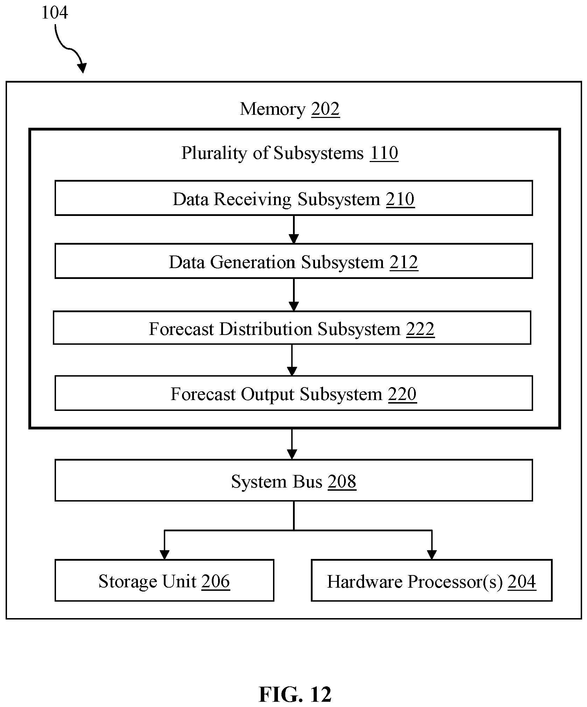

FIG. 12 is a detailed view of the ML-based computing system 104 for distributing the financial transactions, in accordance with another embodiment of the present disclosure. The plurality of subsystems 110 further includes the data receiving subsystem 210, the data generation subsystem 212, the forecast output subsystem 220, and a forecast distribution subsystem 222.

The plurality of subsystems 110 include the data receiving subsystem 210 that is communicatively connected to the one or more hardware processors 204. The data receiving subsystem 210 is configured to receive the one or more user inputs from the one or more users. The one or more user inputs include the information related to at least one of: the entity and the lookback period.

The plurality of subsystems 110 include the data generation subsystem 212 that is communicatively connected to the one or more hardware processors 204. The data generation subsystem 212 is configured to generate one or more data from the one or more inputs received from the one or more users. In an embodiment, the one or more data include at least one of: the holiday data, the historical cash flow data, and the forecast cash flow data. In another embodiment, the forecast cash flow data include at least one of: the month level forecast cash flow data and the week level forecast cash flow data. In an embodiment, the data generation subsystem 212 generates the cash flow data from the plurality of external databases 108 by executing at least one of: data normalization, data anonymization, data aggregation, data analysis, data storage for future use, and the like. In another embodiment, the plurality of external databases 108 may include at least one of: relational databases, object-oriented databases, data warehouses, cloud-based databases, and the like. In yet another embodiment, a format of the cash flow data generated from the plurality of external databases 108 may include at least one of: a comma-separated values (CSV) format, a JavaScript Object Notation (JSON) format, an Extensible Markup Language (XML), spreadsheets, and the like.

The plurality of subsystems 110 includes the forecast distribution subsystem 222 that is communicatively connected to the one or more hardware processors 204. The forecast distribution subsystem 222 is configured to convert the month level forecast cash flow data to the week level forecast cash flow data when at least one of: the holiday data, the historical cash flow data, and the month level forecast cash flow data are generated from the one or more inputs, using a machine learning model. In an embodiment, the machine learning model includes the regression-based machine learning model for converting the month level forecast cash flow data to the week level forecast cash flow data.

The forecast distribution subsystem 222, using the regression based machine learning model, computes a plurality of weeks and a partial week of a month in at least one of: a backward direction and a forward direction. In an embodiment, the backward direction represents that the plurality of weeks and the partial week of the month are computed from a last day of the month going backward seven days. In an embodiment, the forward direction represents that the plurality of weeks and the partial week of the month are computed from a first day of the month going forward seven days. The forecast distribution subsystem 222 further generates a plurality of permutations of the plurality of weeks and the partial week of the month in the backward direction and the forward direction. The forecast distribution subsystem 222 further obtains the historical cash flow data and the holiday data for at least one of: each week and the partial week of the month for the entity inputted by the one or more users for a past lookback period. The forecast distribution subsystem 222 selects a corresponding permutation of at least one of: each week and the partial week of the month based on the historical cash flow data using a machine learning algorithm.

The forecast distribution subsystem 222 computes a weightage for the selected permutation of at least one of: each week and the partial week of the month based on the historical cash flow data at the week level and the holiday data using the machine learning algorithm. For computing the weightage for the selected permutation of at least one of: each week and the partial week of the month, the regression based machine learning model is trained on the historical cash flow data and the month level forecast cash flow data. The regression based machine learning model is trained on the historical cash flow data and the month level forecast cash flow data that are segmented based on a week of a month based segmentation representing a segmentation of the forecast period based on the week of the month (e.g., every month includes a minimum of 4 weeks and optionally 1 partial week).

The forecast distribution subsystem 222 using the regression-based machine learning model further divides the segmented historical cash flow data into two data sets including a training data set and a validation data set. In the training data set, the regression based machine learning model is continuously trained to enable the forecast distribution subsystem 222 to correlate the month level forecast cash flow data with the historical cash flow data for the week in order to compute the weightages to the week of the forecast period for converting the month level forecast cash flow data to the week level forecast cash flow data. In an embodiment, a weekend calendar and a holiday calendar of the forecast period are analyzed for computing the weightages to the week of the forecast period during the conversion of the month level forecast cash flow data to the week level forecast cash flow data. The forecast distribution subsystem 222 finally multiplies the weighted week of the forecast period with the month level forecast cash flow data to convert the month level forecast cash flow data to the week level forecast cash flow data. For example, if the month level forecast cash flow data is generated from the one or more user inputs, then the forecast distribution subsystem 222 converts the monthly level forecast cash flow data to the to at least one of: the weekly level forecast cash flow data and then the daily forecast cash flow data. In another example, if the week level forecast cash flow data is generated from the one or more user inputs, then the forecast distribution subsystem 222 converts the weekly level forecast cash flow data to the daily forecast cash flow data.

For example, the forecast distribution subsystem 222 obtains the first cash flow data including a cash flow of USD 100,000 for the month of June 2023. The forecast distribution subsystem 222 using the regression based machine learning model converts the cash flow of USD 100,000 into a cash flow of USD 25,000 for a first week of June 2023, USD 40,000 for a second week of June 2023, USD 20,000 for a third week of June 2023, USD 10,000 for a fourth week of June 2023, USD 5,000 for a fifth partial week of June 2023. The forecast distribution subsystem 222 further converts the cash flow for a particular day. For example, the cash flow on 15 June 2023 is USD 3,000. The second validation data set is used for testing the performance of the regression based machine learning model.

In an embodiment, the machine learning model includes the regression-based machine learning model for converting the week level forecast cash flow data to the day level forecast cash flow data. The regression-based machine learning model converts the week level forecast cash flow data to the day level forecast cash flow data by (a) obtaining the historical cash flow data and the holiday data for at least one of: each week and the partial week of the month for the entity inputted by the one or more users for the past lookback period, (b) computing a weightage for each day of at least one of: each week and the partial week based on the historical cash flow data at a day level and the holiday data using the machine learning algorithm, (c) generating the day level forecast cash flow data by multiplying the week level forecast cash flow data with the weightage computed for each day.

For computing the weightage for each day, the regression-based machine learning model is configured to: (a) segment the historical cash flow data and the week level forecast cash flow data based on a day of the week based segmentation representing a segmentation of the forecast period based on a day of the week, and (b) correlate the week level forecast cash flow data with the historical cash flow data for the day to compute the weightage for each day.

The plurality of subsystems 110 include the forecast output subsystem 220 that is communicatively connected to the one or more hardware processors 204. The forecast output subsystem 220 provides an output of at least one of: the quarter level forecast cash flow, the month level forecast cash flow data, the week level forecast cash flow data, and the day level forecast cash flow data to the one or more users on the user interface associated with one or more electronic devices 102.

In an embodiment, the regression based machine learning model for distributing the cash flow at week-level or day-level may include at least one of: one or more of simple linear regression models, a multiple linear regression model, a polynomial regression model, a support vector regression model, a decision tree regression model, a random forest regression model, and the like.

In another embodiment, the regression based ML-model may include at least one of: a light gradient boost machine (Light GBM) regression model, an extreme gradient boost (XGBoost) regression model, an ARIMA (Autoregressive Integrated Moving Average) regression model, and the like.

The extreme gradient boost (XGBoost) regression model, the ARIMA (Autoregressive Integrated Moving Average) regression model, and the light gradient boost machine (Light GBM) regression model are well-known technologies, and thus detailed description thereof is omitted.

In one embodiment, the Light GBM regression model is used for distributing the cash flow at week-level or day-level. The Light GBM regression model is a gradient boosting framework that uses tree-based learning algorithms for regression tasks. The Light GBM regression model is designed to be efficient and scalable, particularly for datasets with a large number of features. In a regression analysis, the Light GBM regression model is configured to predict a continuous target variable based on a set of input features. The Light GBM regression model uses a set of decision trees to make these predictions, where each tree is built to correct the errors of the previous trees. The final prediction is obtained by taking a weighted average of the predictions from all the trees.

In one embodiment, the forecast distribution subsystem 222 is configured to utilize the Light GBM regression model to convert the month or week level forecast cash flow data to the week level or day level forecast cash flow data when at least one of: the holiday data, the historical cash flow data, and the month level forecast cash flow data are generated from the one or more inputs, using a machine learning model. The week-level or day-level forecast cash flow data comprises an estimated amount of cash that an entity or company expects to receive in a certain week or a certain day, respectively.

The input for the forecast distribution subsystem 222 includes one or more of the holiday data, the historical cash flow data, and the month-level or week-level forecast cash flow data.

The Light GBM regression model is configured to compute a plurality of weeks and a partial week of a month in at least one of: a backward direction and a forward direction. In an embodiment, the backward direction represents that the plurality of weeks and the partial week of the month are computed from a last day of the month going backward seven days. In an embodiment, the forward direction represents that the plurality of weeks and the partial week of the month are computed from a first day of the month going forward seven days. The forecast distribution subsystem 222 based on the Light GBM regression model is further configured to generate a plurality of permutations of the plurality of weeks and the partial week of the month in the backward direction and the forward direction. The forecast distribution subsystem 222 based on the Light GBM regression model is further configured to obtain the historical cash flow data and the holiday data for at least one of: each week and the partial week of the month for the entity inputted by the one or more users for a past lookback period. The forecast distribution subsystem 222 based on the Light GBM regression model is further configured to select a corresponding permutation of at least one of: each week and the partial week of the month based on the historical cash flow data using a machine learning algorithm.

The forecast distribution subsystem 222 is configured to compute a weightage for the selected permutation of at least one of: each week and the partial week of the month based on the historical cash flow data at the week level and the holiday data using the Light GBM regression model. For computing the weightage for the selected permutation of at least one of: each week and the partial week of the month, the Light GBM regression model trained on the historical cash flow data and the month level forecast cash flow data. The Light GBM regression model trained on the historical cash flow data and the month level forecast cash flow data are segmented based on a week of a month based segmentation representing a segmentation of the forecast period based on the week of the month (e.g., every month includes a minimum of 4 weeks and optionally 1 partial week).

In another embodiment, the data is pre-processed to ensure that the data are in a suitable format for input into the Light GBM regression model.

In one non-limiting embodiment, the Light GBM regression model is trained using the pre-processed input data to predict the forecasted week-level or day-level cash flow. The Light GBM regression model uses a set of decision trees to make these predictions, where each tree is built to correct the errors of the previous trees. The final prediction is obtained by taking a weighted average of the predictions from all the trees.

In another embodiment, several hyperparameters of the Light GBM regression model are tuned to improve the performance and speed of the Light GBM regression model. The hyperparameters include, but are not limited to, at least one of: a boosting hyperparameter, a num_leaves hyperparameter, a max_depth hyperparameter, a learning_rate hyperparameter, a min_data_in_leaf hyperparameter, a feature_fraction hyperparameter, and a bagging_fraction and bagging_freq hyperparameter.

The boosting hyperparameter is configured to control the type of boosting algorithm to use. In an embodiment, the Light GBM regression model supports three types: GBDT (traditional gradient boosting decision tree), DART (dropout additive regression tree), and GOSS (gradient-based one-side sampling). The num_leaves hyperparameter is configured to control the maximum number of leaves in one tree. In an embodiment, a larger num_leaves means more complex tree and higher accuracy, but also more risk of overfitting. The max_depth hyperparameter is configured to control the maximum depth of each tree. In an embodiment, a deeper tree can capture more complex interactions among the features, but also more prone to overfitting.

The learning_rate hyperparameter is configured to control the learning rate or step size of each iteration. In an embodiment, a lower learning_rate means slower learning but more robust results. A higher learning_rate means faster learning but more risk of overfitting. The min_data_in_leaf hyperparameter is configured to control the minimum number of data (i.e., samples) in one leaf. In an embodiment, a higher min_data_in_leaf means more conservative tree growth, as only nodes with enough samples are split.

The feature_fraction hyperparameter is configured to control the fraction of features that are randomly sampled for each tree. In an embodiment, a lower feature_fraction means less overfitting but more underfitting. A higher feature_fraction means more overfitting but less underfitting. The bagging_fraction and bagging_freq hyperparameter is configured to control the fraction and frequency of data that are randomly sampled for each tree. In an embodiment, a lower bagging_fraction means less variance but more bias. A higher bagging_fraction means more variance but less bias. The bagging_freq controls how often bagging is performed, 0 means disable bagging.

The forecasted cash flow predicted by the Light GBM regression model transmitted to the forecast output subsystem 220, which is configured to output the forecasted cash flow on a user interface screen of one or more electronic devices 102 associated with a user.

In another alternative embodiment, the XGBoost regression model is used for distributing the cash flow at week-level or day-level. The XGBoost regression model is an open-source library that provides an efficient and effective implementation of the gradient boosting algorithm for regression problems. The Gradient boosting is a technique that builds an ensemble of decision trees, where each tree tries to correct the errors made by the previous ones. The XGBoost regression model uses objective functions that contain a loss function and a regularization term to prevent overfitting. The XGBoost regression model also uses various optimization techniques including at least one of: parallelization, tree pruning, handling of missing values, and the like. The XGBoost regression model can be used for regression problems by specifying the appropriate objective function for mean squared error and root mean squared error.

In one embodiment, the forecast distribution subsystem 222 uses the XGBoost regression model to convert the month or week level forecast cash flow data to the week level or day level forecast cash flow data when at least one of: the holiday data, the historical cash flow data, and the month level forecast cash flow data are generated from the one or more inputs, using a machine learning model. The week-level or day-level forecast cash flow data comprises an estimated amount of cash that an entity or company expects to receive in a certain week or a certain day, respectively.

The input for the forecast generation subsystem 218 includes one or more of the holiday data, the historical cash flow data, and the month-level or week-level forecast cash flow data.

The XGBoost regression model is configured to compute a plurality of weeks and a partial week of a month in at least one of: a backward direction and a forward direction. In an embodiment, the backward direction represents that the plurality of weeks and the partial week of the month are computed from a last day of the month going backward seven days. In an embodiment, the forward direction represents that the plurality of weeks and the partial week of the month are computed from a first day of the month going forward seven days. The forecast distribution subsystem 222 based on the XGBoost regression model is further configured to generate a plurality of permutations of the plurality of weeks and the partial week of the month in the backward direction and the forward direction. The forecast distribution subsystem 222 based on the XGBoost regression model is further configured to obtain the historical cash flow data and the holiday data for at least one of: each week and the partial week of the month for the entity inputted by the one or more users for a past lookback period. The forecast distribution subsystem 222 based on the XGBoost regression model is further configured to select a corresponding permutation of at least one of: each week and the partial week of the month based on the historical cash flow data using a machine learning algorithm.

The forecast distribution subsystem 222 is configured to compute a weightage for the selected permutation of at least one of: each week and the partial week of the month based on the historical cash flow data at the week level and the holiday data using the XGBoost regression model. For computing the weightage for the selected permutation of at least one of: each week and the partial week of the month, the XGBoost regression model is trained on the historical cash flow data and the month level forecast cash flow data. The XGBoost regression model trained on the historical cash flow data and the month level forecast cash flow data are segmented based on a week of a month based segmentation representing a segmentation of the forecast period based on the week of the month (e.g., every month includes a minimum of 4 weeks and optionally 1 partial week).

In another embodiment, the data is pre-processed to ensure that is the data are in a suitable format for input into the XGBoost regression model.

In one non-limiting embodiment, the XGBoost regression model is trained using the pre-processed input data to predict the forecasted week-level or day-level cash flow. The XGBoost regression model uses a set of decision trees to make these predictions, where each tree is built to correct the errors of the previous trees. The final prediction is obtained by taking a weighted average of the predictions from all the trees.

In another embodiment, several hyperparameters of the XGBoost regression model are tuned to improve the performance and speed of the XGBoost regression model. The hyperparameters include, but are not limited to, at least one of: an eta hyperparameter, a max_depth hyperparameter, a gamma hyperparameter, a min_child_weight hyperparameter, a subsample hyperparameter, colsample_bytree,colsample_bylevel, colsample_bynode hyperparameters.

The eta (also called learning_rate) hyperparameter is configured to control the learning rate or step size of each iteration. In an embodiment, a lower eta means slower learning but more robust results. A higher eta means faster learning but more risk of overfitting. The max_depth hyperparameter is configured to control the maximum depth of each tree. In an embodiment, a deeper tree can capture more complex interactions among the features, but also more prone to overfitting.

The gamma hyperparameter is configured to control the minimum loss reduction required to make a further split on a leaf node. In an embodiment, a higher gamma means more conservative tree growth, as only strong splits are made. The min_child_weight hyperparameter is configured to control the minimum sum of instance weight (hessian) needed in a child node. In an embodiment, a higher min _child _weight means the algorithm is more selective about splitting, as only nodes with enough samples are split.

The subsample hyperparameter is configured to control the fraction of training data that is randomly sampled for each tree. In an embodiment, a lower subsample means less variance but more bias. A higher subsample means more variance but less bias. The colsample_bytree,colsample_bylevel, colsample_bynode hyperparameters are configured to control the fraction of features that are randomly sampled for each tree, each level, and each split respectively. In an embodiment, a lower colsample means less overfitting but more underfitting. A higher colsample means more overfitting but less underfitting.

The forecasted cash flow predicted by the XGBoost regression model transmitted to the forecast output subsystem 220, which is configured to output the forecasted cash flow on a user interface screen of one or more electronic devices 102 associated with a user.

In one embodiment, the autoregressive integrated moving average (ARIMA) regression model is used for distributing the cash flow at week-level or day-level. The ARIMA regression model is a time series forecasting machine learning model that combines autoregressive (AR), differencing (I), and moving average (MA) components. The ARIMA regression model is used to predict future values based on past observations of a time series data. The autoregressive (AR) component models the relationship between an observation and a certain number of lagged observations (i.e., previous values) in the time series. The ARIMA regression model uses the dependent relationship between the observation and its lagged values to predict future values. The "p" parameter represents the order of the autoregressive component and indicates how many lagged observations are considered. The moving average (MA) component models the dependency between an observation and a residual error from a moving average model applied to lagged observations. The ARIMA regression model helps to capture the random fluctuations in the time series. The "q" parameter represents the order of the moving average component and indicates how many lagged residuals are considered. The integration (I) component is used when differencing is applied to the time series to make it stationary. The differencing operation removes trends or seasonality, resulting in an integrated series. The "d" parameter represents the order of differencing and indicates how many times differencing is performed.

The appropriate values for the ARIMA parameters (p, d, q) need to be determined. This is typically done by analyzing the autocorrelation function (ACF) and partial autocorrelation function (PACF) plots of the differenced time series. These partial autocorrelation function (PACF) plots help to identify the appropriate lag values for the AR and MA components. Once the parameters are determined, the ARIMA regression model is fitted to the training data using techniques like maximum likelihood estimation. This involves estimating the coefficients of the AR and MA terms to minimize the difference between the predicted values and the actual values.

After the ARIMA regression model is fitted, the ARIMA regression model can be used to make predictions for future values of the time series. The forecasted values are generated by using the estimated coefficients along with the lagged values and residual errors. The accuracy of the ARIMA regression model can be evaluated using one or more statistical measures including at least one of: mean absolute error (MAE), mean squared error (MSE), and root mean squared error (RMSE), and the like. These metrics help assess how well the ARIMA regression model performs in predicting the future values of the time series.

In one embodiment, the forecast distribution subsystem 222 is configured to utilize the ARIMA regression model to convert the month or week level forecast cash flow data to the week level or day level forecast cash flow data when at least one of: the holiday data, the historical cash flow data, and the month level forecast cash flow data are generated from the one or more inputs, using a machine learning model. The week-level or day-level forecast cash flow data comprises an estimated amount of cash that an entity or company expects to receive in a certain week or a certain day, respectively.

The input for the forecast generation subsystem 218 includes one or more of the holiday data, the historical cash flow data, and the month-level or week-level forecast cash flow data.

The ARIMA regression model is configured to compute a plurality of weeks and a partial week of a month in at least one of: a backward direction and a forward direction. In an embodiment, the backward direction represents that the plurality of weeks and the partial week of the month are computed from a last day of the month going backward seven days. In an embodiment, the forward direction represents that the plurality of weeks and the partial week of the month are computed from a first day of the month going forward seven days. The forecast distribution subsystem 222 based on the ARIMA regression model is further configured to generate a plurality of permutations of the plurality of weeks and the partial week of the month in the backward direction and the forward direction. The forecast distribution subsystem 222 based on the ARIMA regression model is further configured to obtain the historical cash flow data and the holiday data for at least one of: each week and the partial week of the month for the entity inputted by the one or more users for a past lookback period. The forecast distribution subsystem 222 based on the ARIMA regression model is further configured to select a corresponding permutation of at least one of: each week and the partial week of the month based on the historical cash flow data using a machine learning algorithm.

The forecast distribution subsystem 222 is configured to compute a weightage for the selected permutation of at least one of: each week and the partial week of the month based on the historical cash flow data at the week level and the holiday data using the ARIMA regression model. For computing the weightage for the selected permutation of at least one of: each week and the partial week of the month, the ARIMA regression model is trained on the historical cash flow data and the month level forecast cash flow data. The ARIMA regression model trained on the historical cash flow data and the month level forecast cash flow data are segmented based on a week of a month based segmentation representing a segmentation of the forecast period based on the week of the month (e.g., every month includes a minimum of 4 weeks and optionally 1 partial week).

In another embodiment, the data is pre-processed to ensure that is the data are in a suitable format for input into the ARIMA regression model.

In one non-limiting embodiment, the ARIMA regression model is trained using the pre-processed input data to predict the forecasted week-level or day-level cash flow. The ARIMA regression model uses a set of decision trees to make these predictions, where each tree is built to correct the errors of the previous trees. The final prediction is obtained by taking a weighted average of the predictions from all the trees.

The forecasted cash flow predicted by the ARIMA regression model transmitted to the forecast output subsystem 220, which is configured to output the forecasted cash flow on a user interface screen of one or more electronic devices 102 associated with a user.

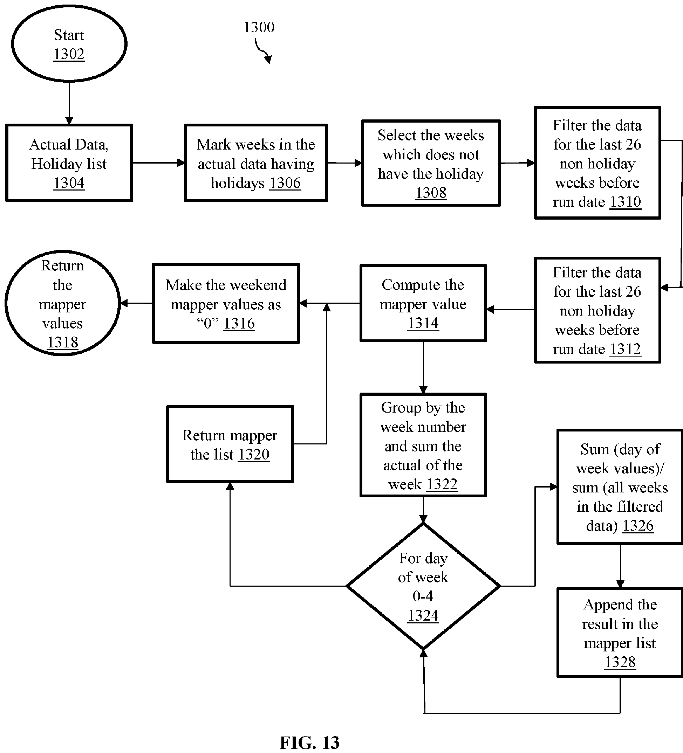

**FIG. 13** is a flow chart 1300 illustrating an exemplary code flow for creating mapper values, in accordance with an embodiment of the present disclosure. To create the mapper values from the actual data is to replicate the historical distribution of the actual data over the week cycles. In an embodiment, a default look back for the computation of the mapper values is 26 weeks from a rundate that does not include the holiday in the week to avoid skewness in the created mapper values. Mapper values are the ratios which are computed based on the historical data, and are used to redistribute forecast values from higher horizons (year-level, month-level, week-level) to lower horizons (month-level, week-level or day-level, respectively). In an embodiment, the mapper values may include pseudocode for mapper generation.

The process starts at step 1302. At step 1304, the day level actual data and the holiday list of the particular entity are provided as inputs. Further, the ML-based computing system 104 determines whether the week includes a holiday in the week or not. Further, the ML-based computing system 104 creates a new column which is a holiday week based on the previous statements and marks true or false for the week as per the result. Further, a lookup table is created for the week level cumulative for each of the weeks in the actual data (i.e., historical cash flow data). Further, data is filtered by selecting only weeks that include no holiday in the past, as shown in step 1310. Further, the data is clipped from the week before the rundate to last 26 weeks for the distribution computation. The ratios between the sum of day of week for the clipped week and sum of clipped weeks. Furthermore, the weekend ratios are set to be zero as per the business use case, as shown in step 1316.

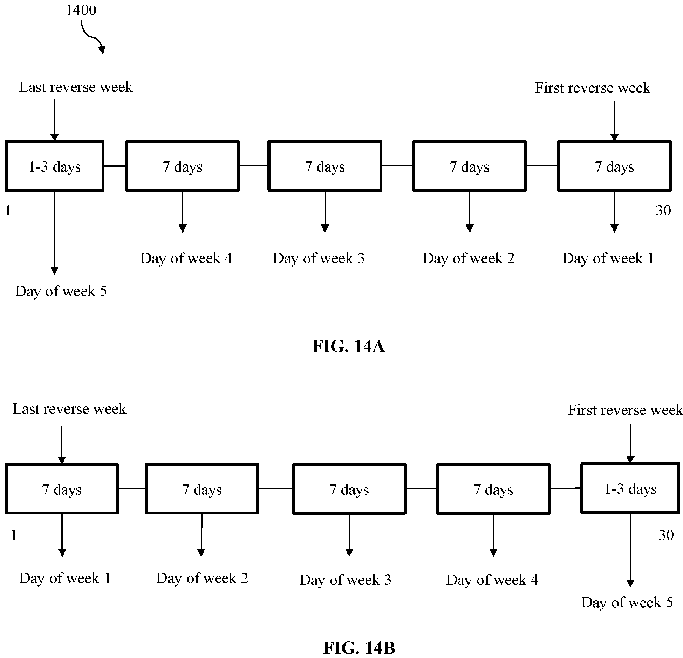

**FIGS. 14A-14B** are block diagrams 1400 illustrating an exemplary computation of pro-rata for a week of month in backward and forward directions, in accordance with an embodiment of the present disclosure. In an embodiment, the week of month is not the same as the Monday to Sunday cycle. For monthly pro rata, the week of month is computed in two ways. The two ways are backward and forward directions. In an embodiment, the backward direction represents that the plurality of weeks and the partial week of the month are computed from the last day of the month going backward seven days. In an embodiment, the forward direction represents that the plurality of weeks and the partial week of the month are computed from a first day of the month going forward seven days (i.e., every month includes five weeks of month, and hence four weeks of month include seven days in the case of no leap year February and fifth week of the month includes at least 1 to 3 days).

In an embodiment, the present invention provides methods for cumulative **forecast** distribution and custom holiday forecast shifting. In an embodiment, the steps of the method for the cumulative forecast distribution are described. In an embodiment, for the cumulative forecast distribution the first step is to cumulate the daily forecasted cash flow data to the week level. The second step is to map the day of week to the mapper and weekly cumulative forecast. The third step is to compute the amount for the particular day - forecast for day of week=cumulative of the weeks forecast $\times$ (day of week mapper / sum of the mapper list)

In an embodiment, the fourth step is to identify the weeks in the forecast range and the holidays in the corresponding week.

In an embodiment, for the custom holiday forecast shifting, the first step is to filter all the weeks having holiday from the cumulative forecast distribution data frame. Further, the second step is to compute the backward forecast value movement. The backward forecast value moment includes following steps of: (a) determining whether the holiday lies on Thursday and Friday, or Friday, (b) moving 85% of the holiday cash to a previous business day in the same week when the holiday lies on Thursday and Friday, or Friday, (c) adding the moved forecast amount to the next business day's forecast, (d) prorating the residue amount (i.e., 25% of the holiday cash among the rest of the business day of the week excluding the next business day), and (e) updating the forecast for the week in the original data frame. For example, the week is considered as Monday to Friday, so the previous business day of Friday in the same week is Thursday.

Further, the third step is to compute the forward forecast value movement. The forward forecast value moment includes following steps of: (a) determining if the holiday does not lie on Thursday and Friday, or Friday, (b) moving 85% of the holiday cash to a next business day in the same week when the holiday does not lie on Thursday and Friday, or Friday, (c) adding the moved forecast amount to the next business day's forecast, (d) prorating the residue amount (i.e., 25% of the holiday cash among the rest of the business day of the week excluding the next business day), and (e) updating the forecast for the week in the original data frame. For example, the week is considered as Monday to Friday, so the next business day of Tuesday in the same week is Wednesday. In an embodiment, the above steps are repeated for all the weeks having holiday in the particular week and return the day level redistributed data as the new forecast.

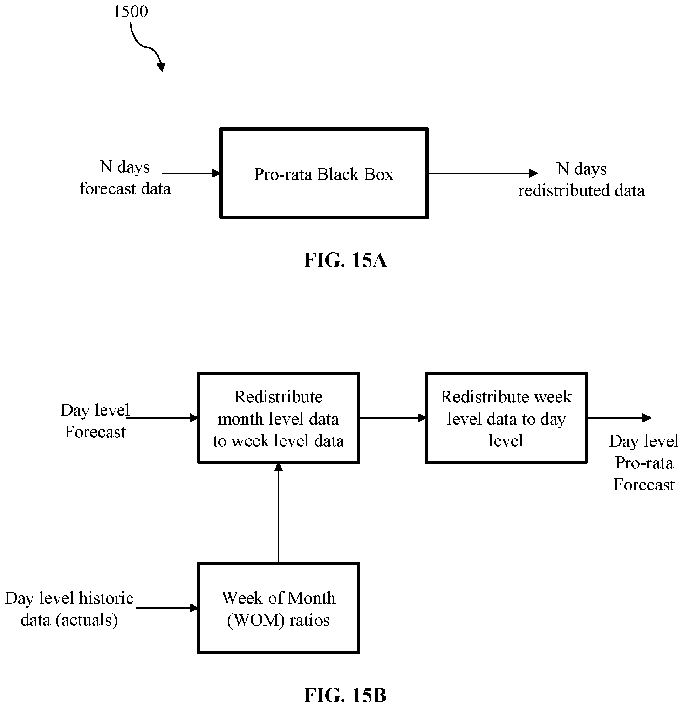

**FIG. 15A** is a block diagram 1500 illustrating an exemplary monthly pro-rata with an input and output, in accordance with an embodiment of the present disclosure. According to **FIG. 15A,** a pro-rata is considered in day level historical data. The day level forecast is the amount which needs to be redistributed. Using the historical data, mapper ratios are generated. The term "pro-rata" as used in this invention means forecasting or distributing the predicted cash flow in different time horizons proportionally or in proportion. The pro-rata is used to describe a process where the total cash flow is allocated or distributed in different time horizons (year, quarter, month or day) in accordance to the methods of this disclosure.

**FIG. 15B** is a block diagram 1500 illustrating an exemplary monthly pro-rata, in accordance with an embodiment of the present disclosure. Initially, each month's total amount is divided into the weeks of the same month. In an embodiment, week of the month ratios are computed in two ways that include week of month ratios for months having 30/31 days combined and for February separately, and year on year (YOY). In an embodiment, February has 28 days, 29 days in case of leap year for the scenario of the week of month ratios for months having 30/31 days combined and for February separately, so that the week of month ratios are computed separately but in the same way the months having 30/31 days are combined. This combination is done by aggregating the amount for each week of month for all the months together and dividing it by the total amount for all the months included. Therefore, an output is 10 ratios, 5 weeks of month ratios for the month that has 30 and 31 days, are combined and another 5 weeks for February using the below equation

$$1^{st} \text{ week of month ratio} = \frac{\sum_{i=Mar}^{to\ Aug} \square week\ of\ month\ 1_i}{\sum_{i=Mar}^{to\ Aug} \square monthSum(i)}$$

In an embodiment, where in the WOM 1 is the first week of the month. The monthSum (i) is a function to get the month total. The ratios are computed on a default lookback of 6 months which can be changed.

In an embodiment, for year on year, week of month ratios for each month are computed separately. In an embodiment, an amount for each week of the month is aggregated on the month level and divided by the same month total. Further, the same month amount is combined across all years present using the below formula -

$$1^{st} \text{ week of month ratio for January} = \frac{\sum_{i=y_1}^{y_n} \square(week\ of\ month\ of\ January)_i}{\sum_{i=y_1}^{y_n} \square monthSum(Jan)_i}$$

In an embodiment, the WOM 1 is the first week of the month. The monthSum() is a function to get the month total, and $y_1$ to $y_n$ is the summation of the amount across all the years present in the data. In an embodiment, at least 1.5 years of historical cash flow data is required for the year on year.

In an embodiment, upon computing all the ratios, each month's total is multiplied by respective ratios to convert the redistributed week of month total for all the months. In an embodiment, a week of month level aggregated amount is redistributed into day level, where the amount of each week of month is further divided into seven days of the same. In an embodiment, when dividing the week of month level amount to day level, a set of rules may be applied. Therefore, as N% of the amount goes to every 25th of Monday of every third week of month. These rules can also be specifically applicable for a month. In an embodiment, a default way is used to divide the week of the month total by a number of business days present in the same week of the month and to normalize a pattern in values using week to day pro-rata.

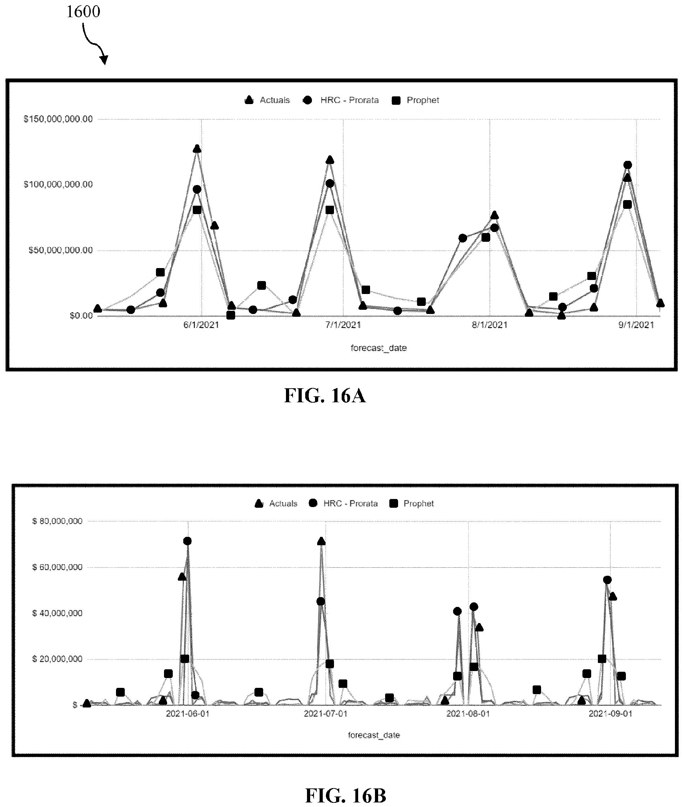

**FIG. 16A** is a graphical representation 1600 illustrating a comparison between the actual cash flow data, pro-rata cash flow data, and the prophet model for depicting day level forecast cash flow data, in accordance with an embodiment of the present disclosure.

**FIG. 16B** is a graphical representation 1600 illustrating a comparison between the actual cash flow data, pro-rata cash flow data, and the prophet model for depicting week level forecast cash flow data, in accordance with an embodiment of the present disclosure. Below Table (6) shows the day level and week level observations for model comparison.

**Table. 6**

| Model | Weekly weighted account | Daily weighted account |
|-------|------------------------|------------------------|
| Prophet | 68.5% | 32.18% |

(continued)

| Model | Weekly weighted account | Daily weighted account |
|---|---|---|
| Month to day pro-rata (Present invention) | 80.5% | 79.68% |

In an embodiment, from the Table (6) there is significant improvement in the weekly weighted accuracy and daily weighted accuracy when the method of the present invention is compared with the prophet forecast results.

According to **FIGS. 16A-16B,** the pro rata is able to capture most of the peaks by the trends observed in the historical cash flow data to achieve the better weekly and daily accuracy. Further, the pro rata is able to follow the weekly trend quite closely as compared to the prophet model. Therefore, the pro rata is able to redistribute the monthly amount accurately. Further, at the day level plot, the pro rata is able to match the historical peaks, which means that the pro-rata is also able to handle holidays at time of redistribution to day level.

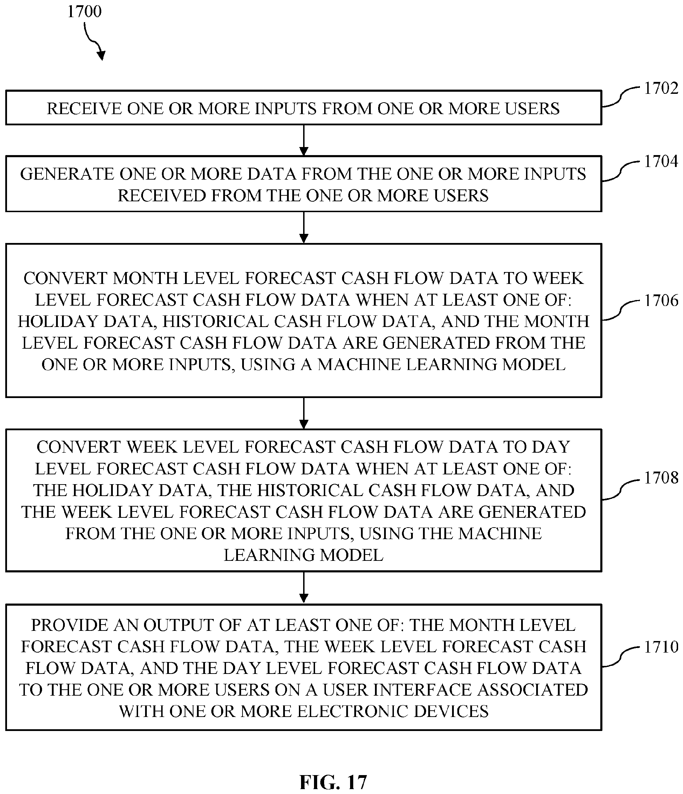

**FIG. 17** is a flow chart illustrating a ML-based computing method 1700 for distributing the financial transactions based on the sparse data, in accordance with an embodiment of the present disclosure. At step 1702, the one or more user inputs are received from the one or more users. The one or more user inputs include the information related to at least one of: the entity and the lookback period. At step 1704, the one or more data are generated from the one or more inputs received from the one or more users. In an embodiment, the one or more data include at least one of: the holiday data, the historical cash flow data, and the forecast cash flow data. The forecast cash flow data include at least one of: the month level forecast cash flow data and the week level forecast cash flow data.

At step 1706, the month level forecast cash flow data are converted to the week level forecast cash flow data when at least one of: the holiday data, the historical cash flow data, and the month level forecast cash flow data are generated from the one or more inputs, using the machine learning model. The machine learning model includes the regression-based machine learning model for converting the month level forecast cash flow data to the week level forecast cash flow data. In an embodiment, the regression-based machine learning model converts the month level forecast cash flow data to the week level forecast cash flow data by (a) computing the plurality of weeks and the partial week of the month in at least one of: the backward direction and the forward direction, (b) generating the plurality of permutations of the plurality of weeks and the partial week of the month in the backward direction and the forward direction, (c) obtaining the historical cash flow data and the holiday data for at least one of: each week and the partial week of the month for the entity inputted by the one or more users for the past lookback period, (d) selecting the corresponding permutation of at least one of: each week and the partial week of the month based on the historical cash flow data using the machine learning algorithm, (e) computing the weightage for the selected permutation of at least one of: each week and the partial week of the month based on the historical cash flow data at the week level and the holiday data using the machine learning algorithm, and (f) generating the week level forecast cash flow data by multiplying the month level forecast cash flow data with the weightage assigned for at least one of: each week and the partial week of the month.

At step 1708, the week level forecast cash flow data are converted to the day level forecast cash flow data when at least one of: the holiday data, the historical cash flow data, and the week level forecast cash flow data are generated from the one or more inputs, using the machine learning model. In an embodiment, the machine learning model includes the regression-based machine learning model for converting the week level forecast cash flow data to the day level forecast cash flow data. The regression-based machine learning model converts the week level forecast cash flow data to the day level forecast cash flow data by (a) obtaining the historical cash flow data and the holiday data for at least one of: each week and the partial week of the month for the entity inputted by the one or more users for the past lookback period, (b) computing a weightage for each day of at least one of: each week and the partial week based on the historical cash flow data at a day level and the holiday data using the machine learning algorithm, (c) generating the day level forecast cash flow data by multiplying the week level forecast cash flow data with the weightage computed for each day.

At step 1710, the output of at least one of: the month level forecast cash flow data, the week level forecast cash flow data, and the day level forecast cash flow data is provided to the one or more users on the user interface associated with the one or more electronic devices 102.

The present invention has the following advantages. The present invention is performing better with respect to the prophet and the rolling average. Further, the present invention provides better results along with capturing the cyclicity as per required use cases. Further, the accuracy of the present invention is achieved after being able to adequately capture the cyclicity in the data whereas the other model achieves the accuracy over a period of time by cancelling out the effects of equivalent over and under forecasting and maintaining the mean value to the actuals. Furthermore, the present invention is also able to maintain the standard deviation from the mean close to the actuals.

The present invention with the ML-based computing system 104 and the ML-based computing method (1100, 1700) is faster as compared to the existing models. Further, the present invention provides the ability to retain the trend and relative cyclicity of the actuals in the forecast. Further, the present invention provides the ability to handle holiday cash shifting. Further, the present invention provides the ability to distribute cumulative weekly and monthly cash to the day level as per the historical information to obtain the day level forecast with the trend correlating to the actuals.

Further, the present invention with the ML-based computing system 104 that includes a plurality of functions created based on common patterns observed over a plurality of sparse data sources and generalized use cases of the plurality of sparse data sources. In order to determine the pattern closest to available functions, a ranking of the plurality of functions is done based on back testing weighted average accuracy and their 90 and 75 percentile of error percentage over a period of time.

The present invention converts the month level forecast cash flow data to the week level forecast cash flow data and then to the day level forecast cash flow data with better accuracy. The present invention has the ability to handle holidays at the time of redistribution (i.e., conversion) to the day level. The present invention has the ability to perform hyper parameter tune on parameters to perform the pro-rata from monthly to weekly.

Further, the present invention has ability to handle shifting of forecasted amount of holidays in an optimized way to reduce deviation from weekly seasonality of the actuals (i.e., the historical cash flow data). Further, the present invention provides fast execution time for redistribution of cash according to the derived mapper values. Further, the redistribution of the day level forecast cash flow data from the week level; forecast cash flow data makes better accuracy better by keeping the cumulative accuracy time. Furthermore, the present invention enables the machine learning models to forecast at week/month level forecast cash flow data that are to be redistributed at the day level forecast cash flow data based on the historical cash flow data.

In certain embodiments, the invention provides the ML-based computing method 1700 for dynamically updating the ML-based computing systems 104 and re-train the systems. The ML-based computing method 1700 further comprises: monitoring the performance of the machine learning model in real time; identifying instances where the performance of the ML-based computing system 104 falls below a predetermined threshold; automatically generating new training data based on the identified instances; and retraining the machine learning model using the new training data.

As the ML-based computing system 104 is retrained, the ML-based computing system 104 becomes more proficient in forecasting financial transactions based on sparse data and distributing financial transactions based on sparse data. This results in significant benefits for both the processing hardware (e.g., servers) and the overall decision-making process. The continuous improvement in accuracy and efficiency, facilitated by the ongoing updates to the machine learning model, leads to tangible gains in performance. The present invention not only optimizes the use of processing hardware but also reduces the number of incorrect predictions. By streamlining the ML-based computing system 104 in this manner, the present invention provides a more robust and reliable solution for customer segmentation and collections worklist generation.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based computing system 104 either directly or through intervening I/O controllers. Network adapters may also be coupled to the ML-based computing system 104 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based computing system 104 in accordance with the embodiments herein. The ML-based computing system 104 herein comprises at least one processor or central processing unit (CPU). The CPUs are interconnected via system bus 208 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based computing system 104. The ML-based computing system 104 can read the inventive instructions on the program storage devices and follow these instructions to execute the methodology of the embodiments herein.

The ML-based computing system 104 further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/-features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that are issued on an application based here on. Accordingly, the embodiments of the present invention are intended to be illustrative, but not limiting, of the scope of the invention, which is set forth in the following claims.

## Claims

1. A machine-learning based (ML-based) computing method for distributing financial transactions, the ML-based computing method comprising:

   receiving, by one or more hardware processors, one or more user inputs from one or more users, wherein the one or more user inputs comprise information related to at least one of: an entity and a lookback period;
   generating, by the one or more hardware processors, one or more data from the one or more inputs received from the one or more users, wherein the one or more data comprise at least one of: holiday data, historical cash flow data, and forecast cash flow data, and wherein the forecast cash flow data comprise at least one of: month level forecast cash flow data and week level forecast cash flow data;
   converting, by the one or more hardware processors, the month level forecast cash flow data to the week level forecast cash flow data when at least one of: the holiday data, the historical cash flow data, and the month level forecast cash flow data are generated from the one or more inputs, using a machine learning model;
   converting, by the one or more hardware processors, the week level forecast cash flow data to day level forecast cash flow data when at least one of: the holiday data, the historical cash flow data, and the week level forecast cash flow data are generated from the one or more inputs, using the machine learning model; and
   providing, by the one or more hardware processors, an output of at least one of: the month level forecast cash flow data, the week level forecast cash flow data, and the day level forecast cash flow data to the one or more users on a user interface associated with one or more electronic devices.

2. The ML-based computing method of claim 1, wherein the forecast cash flow data are generated by:

   determining, by the one or more hardware processors, a growth factor in at least one of: a week level and a month level based on at least one of: the historical cash flow data and the forecast period inputted by the one or more users, wherein the growth factor is determined by computing a ratio of the historical cash flow data for a selected month or week between previous years based on the forecast period inputted by the one or more users; determining, by the one or more hardware processors, average cash flow data in at least one of: a week level and a month level based on at least one of: the historical cash flow data, the forecast period, the lookback period received from the one or more users, and the determined growth factor, wherein the average cash flow data are determined by multiplying the determined growth factor with average historical cash flow data computed for the selected month or week between the previous years; and generating, by the one or more hardware processors, the month level forecast cash flow data and the week level forecast cash flow data for the forecast period using the machine learning model.

3. The ML-based computing method of claim 1, wherein the machine learning model comprises a regression-based machine learning model for generating the forecast cash flow data, and wherein generating the forecast cash flow data comprises:

   dynamically assigning, by the one or more hardware processors, weightages to the average cash flow data and the growth factor; and
   multiplying, by the one or more hardware processors, the weighted average cash flow data and the weighted growth factor to generate the forecast cash flow data for the forecast period inputted by the one or more users.

4. The ML-based computing method of claim 3, wherein dynamically assigning the weightages to the average cash flow data and the growth factor comprises:

   segmenting, by the one or more hardware processors, the historical cash flow data based on at least one of: a geographic location, an industry, a business segment, a legal entity, a type of transactions, a payment method, a product, a service, a customer, a sales channel, time and a currency;
   generating, by the one or more hardware processors, a growth factor dataset by computing the growth factor for a plurality of permutations and combinations of the historical cash flow data and the forecast period;
   generating, by the one or more hardware processors, an average cash flow dataset by computing the average cash flow data for a plurality of permutations and combinations of the historical cash flow data, the forecast period, and the growth factor; and
   correlating, by the one or more hardware processors, the historical cash flow data with the generated growth factor dataset and the average cash flow dataset to dynamically assign weightages to the average cash flow data and the growth factor.

5. The ML-based computing method of claim 1, wherein the machine learning model comprises the regression-based machine learning model for converting the month level forecast cash flow data to the week level forecast cash flow data, and wherein converting the month level forecast cash flow data to the week level forecast cash flow data comprises:

   computing, by the one or more hardware processors, a plurality of weeks and a partial week of a month in at least one of: a backward direction and a forward direction, wherein the backward direction represents that the plurality of weeks and the partial week of the month are computed from a last day of the month going backward seven days, and wherein the forward direction represents that the plurality of weeks and the partial week of the month are computed from a first day of the month going forward seven days; generating, by the one or more hardware processors, a plurality of permutations of the plurality of weeks and the partial week of the month in the backward direction and the forward direction;
   obtaining, by the one or more hardware processors, the historical cash flow data and the holiday data for at least one of: each week and the partial week of the month for the entity inputted by the one or more users for a past lookback period;
   selecting, by the one or more hardware processors, a corresponding permutation of at least one of: each week and the partial week of the month based on the historical cash flow data using a machine learning algorithm;
   computing, by the one or more hardware processors, a weightage for the selected permutation of at least one of: each week and the partial week of the month based on the historical cash flow data at the week level and the holiday data using the machine learning algorithm; and
   generating, by the one or more hardware processors, the week level forecast cash flow data by multiplying the month level forecast cash flow data with the weightage assigned for at least one of: each week and the partial week of the month.

**6.** The ML-based computing method of in claim 5, wherein computing the weightage for the selected permutation of at least one of: each week and the partial week of the month comprises:

segmenting, by the one or more hardware processors, the historical cash flow data and the month level forecast cash flow data based on a week of the month based segmentation representing a segmentation of the forecast period based on at least one of: the plurality of weeks and the partial week of the month; and
correlating, by the one or more hardware processors, the month level forecast cash flow data with the historical cash flow data for at least one of: each week and the partial week of the month to compute the weightage for the selected permutation of at least one of: each week and the partial week of the month.

**7.** The ML-based computing method of claim 1, wherein the machine learning model comprises the regression-based machine learning model for converting the week level forecast cash flow data to the day level forecast cash flow data, and wherein converting the week level forecast cash flow data to the day level forecast cash flow data comprises:

obtaining, by the one or more hardware processors, the historical cash flow data and the holiday data for at least one of: each week and the partial week of the month for the entity inputted by the one or more users for the past lookback period;
computing, by the one or more hardware processors, a weightage for each day of at least one of: each week and the partial week based on the historical cash flow data at a day level and the holiday data using the machine learning algorithm, wherein computing the weightage for each day comprises:

segmenting, by the one or more hardware processors, the historical cash flow data and the week level forecast cash flow data based on a day of the week based segmentation representing a segmentation of the forecast period based on a day of the week; and
correlating, by the one or more hardware processors, the week level forecast cash flow data with the historical cash flow data for the day to compute the weightage for each day; and

generating, by the one or more hardware processors, the day level forecast cash flow data by multiplying the week level forecast cash flow data with the weightage computed for each day.

**8.** A machine learning based (ML-based) computing system for distributing financial transactions, the ML-based computing system comprising:

one or more hardware processors;
a memory coupled to the one or more hardware processors, wherein the memory comprises a plurality of subsystems in the form of programmable instructions executable by the one or more hardware processors, and wherein the plurality of subsystems comprises:

a data receiving subsystem configured to receive one or more user inputs from one or more users, wherein the one or more user inputs comprise information related to at least one of: an entity and a lookback period;
a data generation subsystem configured to generate one or more data from the one or more inputs received from the one or more users, wherein the one or more data comprise at least one of: holiday data, historical cash flow data, and forecast cash flow data, and wherein the forecast cash flow data comprise at least one of: month level forecast cash flow data and week level forecast cash flow data;
a forecast distribution subsystem configured to:

convert the month level forecast case flow data to the week level forecast cash flow data when at least one of: the holiday data, the historical cash flow data, and the month level forecast cash flow data are generated from the one or more inputs, using a machine learning model; and
convert the week level forecast cash flow data to day level forecast cash flow data when at least one of: the holiday data, the historical cash flow data, and the week level forecast cash flow data are generated from the one or more inputs, using the machine learning model; and
a forecast output subsystem configured to provide an output of at least one of: the month level forecast cash flow data, the week level forecast cash flow data, and the day level forecast cash flow data to the one or more users on a user interface associated with one or more electronic devices.

**9.** The ML-based computing system of claim 8, wherein the forecast cash flow data are generated by:

determining a growth factor in at least one of: a week level and a month level based on at least one of: the historical cash flow data and the forecast period inputted by the one or more users, wherein the growth factor is determined by computing a ratio of the historical cash flow data for a selected month or week between previous years based on the forecast period inputted by the one or more users;

determining average cash flow data in at least one of: a week level and a month level based on at least one of: the historical cash flow data, the forecast period, the lookback period received from the one or more users, and the determined growth factor, wherein the average cash flow data are determined by multiplying the determined growth factor with average historical cash flow data computed for the selected month or week between the previous years; and

generating the month level forecast cash flow data and the week level forecast cash flow data for the forecast period using the machine learning model.

10. The ML-based computing system of claim 8, wherein the machine learning model comprises a regression-based machine learning model for generating the forecast cash flow data, and wherein in generating the forecast cash flow data, the regression-based machine learning model is configured to:

dynamically assign weightages to the average cash flow data and the growth factor; and
multiply the weighted average cash flow data and the weighted growth factor to generate the forecast cash flow data for the forecast period inputted by the one or more users.

11. The ML-based computing system of claim 10, wherein in dynamically assigning the weightages to the average cash flow data and the growth factor, the regression-based machine learning model is configured to:

segment the historical cash flow data based on at least one of: a geographic location, an industry, a business segment, a legal entity, a type of transactions, a payment method, a product, a service, a customer, a sales channel, time and a currency;
generate a growth factor dataset by computing the growth factor for a plurality of permutations and combinations of the historical cash flow data and the forecast period;
generate an average cash flow dataset by computing the average cash flow data for a plurality of permutations and combinations of the historical cash flow data, the forecast period, and the growth factor; and
correlate the historical cash flow data with the generated growth factor dataset and the average cash flow dataset.

12. The ML-based computing system of claim 8, wherein the machine learning model comprises the regression-based machine learning model for converting the month level forecast cash flow data to the week level forecast cash flow data, and wherein in converting the month level forecast cash flow data to the week level forecast cash flow data, the regression-based machine learning model is configured to:

compute a plurality of weeks and a partial week of a month in at least one of: a backward direction and a forward direction, wherein the backward direction represents that the plurality of weeks and the partial week of the month are computed from a last day of the month going backward seven days, and wherein the forward direction represents that the plurality of weeks and the partial week of the month are computed from a first day of the month going forward seven days;
generate a plurality of permutations of the plurality of weeks and the partial week of the month in the backward direction and the forward direction;
obtain the historical cash flow data and the holiday data for at least one of: each week and the partial week of the month for the entity inputted by the one or more users for a past lookback period;
select a corresponding permutation of at least one of: each week and the partial week of the month based on the historical cash flow data using a machine learning algorithm;
compute a weightage for the selected permutation of at least one of: each week and the partial week of the month based on the historical cash flow data at the week level and the holiday data using the machine learning algorithm; and
generate the week level forecast cash flow data by multiplying the month level forecast cash flow data with the weightage assigned for at least one of: each week and the partial week of the month.

13. The ML-based computing system of claim 12, wherein in computing the weightage for the selected permutation of at least one of: each week and the partial week of the month, the regression-based machine learning model is configured to:

segment the historical cash flow data and the month level forecast cash flow data based on a week of the month based segmentation representing a segmentation of the forecast period based on at least one of: the plurality of weeks and the partial week of the month; and

correlate the month level forecast cash flow data with the historical cash flow data for at least one of: each week and the partial week of the month to compute the weightage for the selected permutation of at least one of: each week and the partial week of the month.

14. The ML-based computing system of claim 8, wherein the machine learning model comprises the regression-based machine learning model for converting the week level forecast cash flow data to the day level forecast cash flow data, and wherein in converting the week level forecast cash flow data to the day level forecast cash flow data, the regression-based machine learning model is configured to:

obtain the historical cash flow data and the holiday data for at least one of: each week and the partial week of the month for the entity inputted by the one or more users for the past lookback period;

compute a weightage for each day of at least one of: each week and the partial week based on the historical cash flow data at a day level and the holiday data using the machine learning algorithm, wherein computing the weightage for each day comprises:

segmenting, by the one or more hardware processors, the historical cash flow data and the week level forecast cash flow data based on a day of the week based segmentation representing a segmentation of the forecast period based on a day of the week; and

correlating, by the one or more hardware processors, the week level forecast cash flow data with the historical cash flow data for the day to compute the weightage for each day; and

generate the day level forecast cash flow data by multiplying the week level forecast cash flow data with the weightage computed for each day.

15. A non-transitory computer-readable storage medium having instructions stored therein that when executed by a hardware processor, cause the processor to execute operations of:

receiving one or more user inputs from one or more users, wherein the one or more user inputs comprise information related to at least one of: an entity and a lookback period;

generating one or more data from the one or more inputs received from the one or more users, wherein the one or more data comprise at least one of: holiday data, historical cash flow data, and forecast cash flow data, and wherein the forecast cash flow data comprise at least one of: month level forecast cash flow data and week level forecast cash flow data;

converting the month level forecast cash flow data to the week level forecast cash flow data when at least one of: the holiday data, the historical cash flow data, and the month level forecast cash flow data are generated from the one or more inputs, using a machine learning model;

converting the week level forecast cash flow data to day level forecast cash flow data when at least one of: the holiday data, the historical cash flow data, and the week level forecast cash flow data are generated from the one or more inputs, using the machine learning model; and

providing an output of at least one of: the month level forecast cash flow data, the week level forecast cash flow data, and the day level forecast cash flow data to the one or more users on a user interface associated with one or more electronic devices.

100

One or More
Electronic
Devices 102

External
Database 108

Network
106

ML-Based Computing
System 104

Plurality of
Subsystems
110

**FIG. 1**

104

Memory 202

Plurality of Subsystems 110

Data Receiving Subsystem 210

Data Generation Subsystem 212

Growth Factor Determining Subsystem 214

Average Cash flow Determining Subsystem 216

Forecast Generation Subsystem 218

Forecast Output Subsystem 220

System Bus 208

Storage Unit 206

Hardware Processor(s) 204

**FIG. 2**

**FIG. 3**

**FIG. 4**

500

FIG. 5

600

FIG. 6

700

**FIG. 7**

800

**FIG. 8**

900

**FIG. 9**

1000

**Forecast Accuracy**

Bucket:  D  | W |  M                         1W    1M    3M  | 6M |  12M

Forecast vs Actual (Gas Receipts)                    Forecast Horizon: | 1 Week(s)  ▼ | ⚙

—O— Forecast  —●— Actual

**FIG. 10**

1100

| RECEIVE ONE OR MORE INPUTS FROM ONE OR MORE USERS | 1102 |

| GENERATE CASH FLOW DATA INCLUDING AT LEAST ONE OF: HISTORICAL CASH FLOW DATA AND REAL-TIME CASH FLOW DATA, BASED ON THE ONE OR MORE INPUTS RECEIVED FROM THE ONE OR MORE USERS | 1104 |

| DETERMINE A GROWTH FACTOR IN AT LEAST ONE OF: A WEEK LEVEL AND A MONTH LEVEL BASED ON AT LEAST ONE OF: THE HISTORICAL CASH FLOW DATA AND A FORECAST PERIOD | 1106 |

| DETERMINE AVERAGE CASH FLOW DATA IN AT LEAST ONE OF: A WEEK LEVEL AND A MONTH LEVEL BASED ON AT LEAST ONE OF: THE HISTORICAL CASH FLOW DATA, THE FORECAST PERIOD, A LOOKBACK PERIOD RECEIVED FROM THE ONE OR MORE USERS, AND THE DETERMINED GROWTH FACTOR | 1108 |

| GENERATE FORECAST CASH FLOW DATA IN AT LEAST ONE OF: A WEEK LEVEL, A MONTH LEVEL, A QUARTER LEVEL, AND A YEAR LEVEL FOR THE FORECAST PERIOD USING A MACHINE LEARNING MODEL | 1110 |

| PROVIDE AN OUTPUT OF THE FORCAST CASH FLOW DATA TO THE ONE OR MORE USERS ON A USER INTERFACE ASSOCIATED WITH ONE OR MORE ELECTRONIC DEVICES | 1112 |

**FIG. 11**

104

Memory 202

Plurality of Subsystems 110

Data Receiving Subsystem 210

Data Generation Subsystem 212

Forecast Distribution Subsystem 222

Forecast Output Subsystem 220

System Bus 208

Storage Unit 206

Hardware Processor(s) 204

**FIG. 12**

**FIG. 13**

1400

Last reverse week                                                              First reverse week

| 1-3 days | 7 days | 7 days | 7 days | 7 days |

1                                                                                          30

Day of week 4    Day of week 3    Day of week 2    Day of week 1

Day of week 5

**FIG. 14A**

Last reverse week                                                              First reverse week

| 7 days | 7 days | 7 days | 7 days | 1-3 days |

1                                                                                          30

Day of week 1    Day of week 2    Day of week 3    Day of week 4

Day of week 5

**FIG. 14B**

1500

N days
forecast data →  Pro-rata Black Box  → N days
redistributed data

**FIG. 15A**

Day level
Forecast → Redistribute
month level data
to week level data → Redistribute week
level data to day
level → Day level
Pro-rata
Forecast

Day level historic
data (actuals) → Week of Month
(WOM) ratios

**FIG. 15B**

1600

**FIG. 16A**

**FIG. 16B**

1700

RECEIVE ONE OR MORE INPUTS FROM ONE OR MORE USERS ⌐ 1702

GENERATE ONE OR MORE DATA FROM THE ONE OR MORE INPUTS RECEIVED FROM THE ONE OR MORE USERS ⌐ 1704

CONVERT MONTH LEVEL FORECAST CASH FLOW DATA TO WEEK LEVEL FORECAST CASH FLOW DATA WHEN AT LEAST ONE OF: HOLIDAY DATA, HISTORICAL CASH FLOW DATA, AND THE MONTH LEVEL FORECAST CASH FLOW DATA ARE GENERATED FROM THE ONE OR MORE INPUTS, USING A MACHINE LEARNING MODEL ⌐ 1706

CONVERT WEEK LEVEL FORECAST CASH FLOW DATA TO DAY LEVEL FORECAST CASH FLOW DATA WHEN AT LEAST ONE OF: THE HOLIDAY DATA, THE HISTORICAL CASH FLOW DATA, AND THE WEEK LEVEL FORECAST CASH FLOW DATA ARE GENERATED FROM THE ONE OR MORE INPUTS, USING THE MACHINE LEARNING MODEL ⌐ 1708

PROVIDE AN OUTPUT OF AT LEAST ONE OF: THE MONTH LEVEL FORECAST CASH FLOW DATA, THE WEEK LEVEL FORECAST CASH FLOW DATA, AND THE DAY LEVEL FORECAST CASH FLOW DATA TO THE ONE OR MORE USERS ON A USER INTERFACE ASSOCIATED WITH ONE OR MORE ELECTRONIC DEVICES ⌐ 1710

**FIG. 17**

Europäisches
Patentamt

European
Patent Office

Office européen
des brevets

# EUROPEAN SEARCH REPORT

**Application Number**

EP 24 20 2837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/398604 A1 (ABDUL MOHAMED EBRAHIM [US] ET AL) 15 December 2022 (2022-12-15) * paragraph [0003] - paragraph [0022] * * paragraph [0028] - paragraph [0093] * * figures * | 1-15 | INV. G06Q40/12 G06Q40/02 G06Q10/04 G06N20/00 |
| A | US 2022/147895 A1 (KATZ NOAM [US] ET AL) 12 May 2022 (2022-05-12) * paragraph [0015] - paragraph [0083] * * figures * | 1-15 | |
| A | US 11 636 403 B2 (VISA INT SERVICE ASS [US]) 25 April 2023 (2023-04-25) * column 8, line 20 - column 14, line 51 * * figures * | 1-15 | |

| | |
|---|---|
| | **TECHNICAL FIELDS SEARCHED (IPC)** |
| | G06Q G06N |

The present search report has been drawn up for all claims

| Place of search | Date of completion of the search | Examiner |
|---|---|---|
| The Hague | 6 December 2024 | Rachkov, Vassil |

EPO FORM 1503 03.82 (P04C01)

**EP 4 530 962 A1**

**ANNEX TO THE EUROPEAN SEARCH REPORT
ON EUROPEAN PATENT APPLICATION NO.**

EP 24 20 2837

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| US 2022398604 A1 | 15-12-2022 | US 2022398604 A1<br>WO 2022261603 A1 | 15-12-2022<br>15-12-2022 |
| US 2022147895 A1 | 12-05-2022 | NONE | |
| US 11636403 B2 | 25-04-2023 | US 2020410410 A1<br>US 2023237390 A1 | 31-12-2020<br>27-07-2023 |

EPO FORM P0459

For more details about this annex : see Official Journal of the European Patent Office, No. 12/82

45